# EUROPEAN PATENT APPLICATION

(11) **EP 4 266 450 A1**
(43) Date of publication of application: **25.10.2023**
(21) Application number: 22169362.5
(22) Date of filing: 22.04.2022
(51) Int. Cl.: H01M 10/48, H01M 10/613, H01M 10/63, H01M 10/647, H01M 10/6555, H01M 10/6557, H01M 50/209

(54) **BATTERY SYSTEM WITH COOLER BEAMS**

(71) Applicant: Samsung SDI Co., Ltd., Yongin-si, Gyeonggi-do 17084 (KR)
(72) Inventor: Erhart, Michael, 8054 Seiersberg-Pirka (AT)
(74) Representative: Gulde & Partner

(57) **Abstract**

The present disclosure refers to a battery system comprising a plurality of cell rows (810, 820, 830), each of the cell rows comprising a plurality of cells (80ᵢⱼ) arranged in a row extending along a first direction (X); a plurality of cooler beams (20ₖ); and a channel system comprising a plurality of main channels (30ₖ), each of the main channels being configured for guiding a coolant (F). Each of the cell rows (810, 820, 830) is sub-divided into a plurality of blocks. For each of the blocks, the front side of the block positively abuts against the second side (22b) of one of the cooler beams (20ₖ), and/or the rear side of the block positively abuts against the first side (22a) of another one of the cooler beams. For each of the cooler beams (20ₖ), one of the main channels (30ₖ) is integrated in the cooler beam and is thermally connected to that cooler beam. The present disclosure is further related to a vehicle comprising the battery system.

## Description

### Field of the Disclosure

The present disclosure refers to a battery system having improved cooling characteristics and comprising a plurality of cell rows intersected by a plurality of cooler beams. Also, the present disclosure relates to a vehicle comprising the battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle additionally powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e. g. cylindrical or prismatic, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid or fully electric vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

A battery system further includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

The mechanical integration of such a battery pack requires appropriate mechanical connections between the individual components, e. g., of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually comprise a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS/BMU is provided for managing the battery pack, such as by protecting the battery from operating outside its safe operating area, monitoring its state, calculating secondary data, reporting that data, controlling its environment, authenticating it and/or balancing it.

In case of an abnormal operation state, a battery pack shall usually be disconnected from a load connected to a terminal of the battery pack. Therefore, battery systems further comprise a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging.

To provide thermal control of the battery pack an active or passive thermal management system is required to safely use the at least one battery module by efficiently emitting, discharging and/or dissipating heat generated from its rechargeable batteries. If the heat emission/ discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/ dissipating heat from the cells is required.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (typically above 150°C), it can transit into a thermal runaway. The initial heating may be caused by a local failure, such as a cell internal short circuit, heating from a defect electrical contact, short circuit to a neighboring cell. During the thermal runaway, a failed battery cell, i. e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore burnable and potentially toxic. The vented gas also causes a gas-pressure to increase inside the battery pack.

Safety standards demand that in case of a serious thermal event (e. g., a thermal run-away occurring in one or more cells of a battery system) triggered, e. g., by an internal cell short circuit that for more than 5 minutes after the begin of the thermal event no fire or flames arise outside the battery pack. In future, customers requests that no fire or flames at all happen ("Stop Propagation"). In standard concepts, cell spacers are used for slow down the propagation from one cell to the next cell. Such cell spacers can extend the time of the propagation to typically about 1 to 3 minutes. However, cell spaces typically do not stop a propagation.

To fulfill the new customer requirements, a stop of the propagation in the cell stack is needed. This is hard (very high costs and packaging space) or not to archive by such standard spacer.

Thus, there is a need for a new concept of a battery system, which allows for a complete stop of thermal propagation across the cells inside the battery system or at least for a very long retardation of the thermal propagation (when being connected to a system for providing coolant and to a detection system for detecting a serious thermal event). There is also a need for a battery module allowing for a complete stop of thermal propagation across the cells inside the battery system or at least for a very long retardation of the thermal propagation. Also, there is a need for a vehicle with battery systems or modules that fulfill the new customer requirements.

Hence, it is an object of the present invention as defined by the independent claims to overcome or reduce at least the above-described drawbacks of the prior art and to provide (i) a battery system that allows for a complete stop of thermal propagation across the cells inside the battery system or at least for a very long retardation of the thermal propagation (when being connected to a system for providing coolant and to a detection system for detecting a serious thermal event), to provide (ii) a battery module allowing for a complete stop of thermal propagation across the cells inside the battery system or at least for a very long retardation of the thermal propagation, and to provide (iii) a vehicle with battery systems or modules that fulfill the new customer requirements.

### Summary of Invention

The invention is defined by the appended claims. The description that follows is subjected to this limitation. Any disclosure lying outside the scope of said claims is only intended for illustrative as well as comparative purposes.

According to a first aspect of the present disclosure, a battery system is disclosed. The battery system comprises: a plurality of cell rows, each of the cell rows comprising a plurality of cells arranged in a row extending along a first direction; a plurality of cooler beams; and a channel system comprising a plurality of main channels. Each of the main channels is configured for guiding a coolant. Each of the cells has an essentially prismatic shape being confined, with regard to the first direction, by a planar front face and a planar rear face each arranged perpendicular to the first direction, and wherein, when viewed into the first direction: for each cell, the front side is arranged in front of the rear side. The shape of each of the cells is further confined, with regard to a second direction, by a first lateral face and a second lateral face, and, with regard to a third direction, by a bottom face facing the base portion and a top face. Each of the cell rows is sub-divided into a plurality of blocks, each of the blocks comprising at least one cell, and each of the blocks having a front side and a rear side, wherein, when viewed into the first direction, the front side is formed by the front face of the first cell of this block and the rear side is formed by the rear face of the last cell of this block. Each of the cooler beams is confined, with regard to the first direction, by a planar first side and a planar second side. Each of the front side and the rear side is arranged perpendicular to the first direction and the first side arranged in front of the second side when viewing into the first direction. For each of the blocks, the front side of that block positively abuts against the second side of one of the cooler beams, and/or the rear side of that block positively abuts against the first side of another one of the cooler beams. Further, for each of the cooler beams, one of the main channels is integrated in this cooler beam and is thermally connected to that cooler beam.

A second aspect of the present disclosure refers to a vehicle comprising at least one battery system according to the first aspect.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: is a schematic top view on a first exemplary embodiment of a battery system according to invention;
- Fig. 2: illustrates schematically an exemplary design of the battery cells that can be used in embodiments of the disclosed battery system;
- Fig. 3: is a schematic top view on a second exemplary embodiment of a battery system according to invention;
- Fig. 4: is a schematic top view on a third exemplary embodiment of a battery system
- Fig. 5A: according to invention; schematically shows a cross-sectional cut through an example of a cooler beam that can be used in the battery system according to the present disclosure;
- Fig. 5B: schematically shows a cross-sectional cut through a further example of a cooler beam that can be used in the battery system according to the present disclosure.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first", "second", "third" and the like are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of ±5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

To facilitate the description, a Cartesian coordinate system with axes x, y, z maybe also provided in at least some of the figures. Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

The electronic or electric devices and/or any other relevant devices or components according to embodiments of the present disclosure described herein may be implemented utilizing any suitable hardware, firmware (e. g., an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e. g., on a PCB or another kind of circuit carrier. The conducting elements may comprise metallization, e. g., surface metallizations and/or pins, and/or may comprise conductive polymers or ceramics. Further electrical energy might be transmitted via wireless connections, e. g., using electromagnetic radiation and/or light.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

By a longitudinally installed cooler (cooler beam), the cooler beam itself can be used to stop the thermal propagation from one cell to the next cell. The cooler beam can be used for the standard cell cooling and act also in the case of the thermal runaway as an element to stop the propagation.

According to a first aspect of the present disclosure, a battery system comprises: a plurality of cell rows, each of the cell rows comprising a plurality of cells arranged in a row extending along a first direction; a plurality of cooler beams; and a channel system comprising a plurality of main channels, each of the main channels being configured for guiding a coolant; each of the cells having an essentially prismatic shape being confined, with regard to the first direction, by a planar front face and a planar rear face each arranged perpendicular to the first direction, and wherein, when viewed into the first direction: for each cell, the front side is arranged in front of the rear side; the shape of each of the cells being further confined, with regard to a second direction, by a first lateral face and a second lateral face, and, with regard to a third direction, by a bottom face facing the base portion and a top face; wherein each of the cell rows is sub-divided into a plurality of blocks, each of the blocks comprising at least one cell, and each of the blocks having a front side and a rear side, wherein, when viewed into the first direction, the front side is formed by the front face of the first cell of this block and the rear side is formed by the rear face of the last cell of this block; wherein each of the cooler beams is confined, with regard to the first direction, by a planar first side and a planar second side, each of the front side and the rear side arranged perpendicular to the first direction, and the first side being arranged in front of the second side when viewing into the first direction; wherein, for each of the blocks, the front side of that block positively abuts against the second side of one of the cooler beams, and/or the rear side of that block positively abuts against the first side of another one of the cooler beams; wherein, for each of the cooler beams, one of the main channels is integrated in this cooler beam and is thermally connected to that cooler beam.

In such an arrangement, at least one of the front side and the rear side of each block is thermally connected to a first or second side of a cooler beam and is thus cooled by the cooler beam, when a coolant is guided through the main channel of that cooler beam. Further, due to the thermal insulation of the bottom faces of the cells, a heat transfer from cells affected by a thermal event such as a thermal run-away to the (base portion of the) carrier system is avoided or at least retarded and/or attenuated.

The first direction, the second direction, and the third direction may be defined with reference to the linear axes of a 3-dimensional coordinate system. The coordinate system may be a Cartesian coordinate system. Specifically, the coordinate system may have a first axis x, a second axis y, and a third axis z. Then, the first direction may point into the direction of the first axis x, the second direction may point into the direction of the second axis y, and the third direction may point into the direction of the third axis z. Then, the term "extending along the first direction" with respect to a certain object or entity may denote that the object or entity extends parallel to the first axis x. Correspondingly, this may apply to the second direction with regard to the second axis y and the third direction with regard to the third axis z.

The expression "positively abuts" may denote - with regard to a planar side of a first object and a planar side of a second object - that said planar side of the first object extends along the same plane as said planar side of the second object and that said planar side of the first object and said planar side of the second object at least partially contact each other.

The term "cell" is short for the expression "battery cell." The term "cell row" refers to a row of battery cells. A row of battery cells could also be referred to as a stack of battery cells, wherein the stack, however, may be intersected, i. e., at least for one pair of neighbored cells in the stack, the cells of that pair are spaces apart from each other. The term "block" denotes a "cell block" within a cell row, i. e., a block of several cells arranged along the first direction. In the present context, the "faces" of a cell are the outer side faces (outer side surfaces) of the prismatic cell. The expression "essentially prismatic" means in particular that on at least one of the 6 faces (e. g., the terminal face), further members may be arranged such as electrical harnesses (terminals etc.). Preferably, the cells are shaped identically. Preferably, the cell rows have the same number of cells. Preferably, the cell blocks each comprise the same number of cells. Preferably, each of the blocks comprises one cell, or each of the blocks comprises two cells. Preferably, the cell rows are arranged spaced apart to each other with respect to the second direction. The term "coolant" refers to a cooling fluid. Preferably, each cooler beam intersects each of the cell rows. Preferably, in each of the cooler beams, the first side is spaced apart from the second side with regard to the first direction. Preferably, each of the cooler beams is made of a thermally conductive material or comprises a thermally conductive material.

The terms used in the following are chosen so as to facilitate the intelligibility of the explanation and the expressions used therein. The terms "front face," "rear face," "top face," and "bottom face" as well as "front side" and "rear side" are chosen to facilitate the intelligibility of the explanation. They are in consistency with the figures and the coordinate system shown in the figures. It is clear that in another orientation of the cell cover, the perspective of the viewer must be accordingly adapted. Expressions like "front face," "rear face," "top face," and "bottom face" as well as "front side" and "rear side" could be replaced by terms like "first face," "second face," "third face," and "fourth face" as well as "first side" (of a block) and "second side" (of a block), respectively, throughout the following. Then, the terminology would be fully independent of the spatial orientation of the device, however, the intelligibility may be more difficult.

For each of the cells, a first terminal and a second terminal may be arranged on the top face of this cell. However, alternatively, for each of the cells, the first and/or the second terminal may be arranged on the bottom face of the cell or on one of its lateral faces.

The bottom face and/or the top face of a cell may have a planar shape or essentially planar shape. Then, with reference to the above-defined coordinate system, the bottom face and/or the top face may extend parallel to the x-y-plane. The first lateral face and/or the second lateral face may have a planar shape or essentially planar shape. Then, the bottom face and/or the top face may extend parallel to the x-z-plane of the coordinate system. Further, the front face and the top face may each extend parallel to the y-z-plane of the coordinate system. Also, the base portion may have a planar shape or an essentially planar shape. the base portion may extend parallel to the x-y-plane of the coordinate system.

In the cooler beams, the integrated main channels may be in thermal contact to at least one of the first side or the second side of the respective cooler beam. In some or all of the cooler beams, the integrated main channels may be in thermal contact to the first side and the second side of the respective cooler beam. In at least some of the cooler beams (in particular, the first cooler beam and/or the last cooler beam, when viewed into the first direction), the integrated main channels may be in thermal contact to only one of the first side and the second side of the respective cooler beam.

Since the cell rows each extend along the first direction, the cell rows are arranged in parallel to each other. Further, the cell rows may be lined up along the second direction, in other words, the cell rows are juxtaposed to one another along the second direction.

A main channel (system) may comprise a single channel or pipe or, alternatively, may comprise a plurality of (sub-)channels or pipes. Thus, specifically in view the latter case, each of main channels could also be generally referred to as a main channel system. For the sake of simplicity, the term "main channel" will be used throughout the description, even in case that a main channel comprises a plurality of (sub-)channels or pipes.

In one embodiment of the battery system, the battery system further comprises a carrier framework having a base portion, wherein each of the cell is arranged thermally insulated from the base portion.

The base portion may have a plate-like shape extending essentially perpendicular to the third direction. Further, for each cell, the bottom face may face to the base portion. Then, the bottom face of the cell is thermally insulated from the base portion.

In one embodiment of the battery system, each of the front face and the rear face of a cell has a larger area than each of the first lateral face and the second lateral face of this cell.

Then, any cell abutting a cooler beam contacts the cooler beam with its large side face, which provides a maximum heat exchange between this cell and the tight-fitting cooler beam. When the cooler beam is cooled by a coolant flowing through the main channels system integrated into this cooler beam, the cell becomes optimally cooled as the heat can be discharged from the cell through a large area to the coolant.

In one embodiment of the battery system, for any two cells arranged adjacent to each other in the second direction, the lateral side of one of these cells facing a lateral side of the other one of these cells is thermally insulated from this lateral side of the other one of these cells.

In other words, any two cells arranged adjacent to each other in the second direction are thermally insulated from each other. In case of a thermal event occurring in one of the cells, this helps to avoid or at least to retard and/or to attenuate the propagation of heat from the cell affected by the thermal event to the cell or cells being neighbored with respect to the second direction. Specifically, in case of a thermal run-away occurring in one cell, an affection of the cells neighbored to this cell in the second direction becomes avoided or at least retarded and/or attenuated.

In one embodiment of the battery system, the thermal insulation of each of the cells to the base portion comprises an air gap or at least a partial air gap or comprises an insulation layer.

In one embodiment of the battery system according to the first aspect, the thermal insulation between any to cells arranged adjacent to each other with respect to the second direction comprises an air gap or at least a partial air gap or comprises an insulation layer.

It is desirable to achieve an optimal thermal insulation of the lateral faces of the cells as well as of bottom face of the cells (see above). In best cases, thermal insulation is achieved by an air gap. If, however, a contact cannot be fully avoided between two entities to be thermally insulated from each other (e. g., due to mechanical connections required for the sake of mechanical stability), the contact may be reduced to a minimum. However, layers comprising materials having a rather low heat conductivity may also be employed to achieve an excellent thermal insulation.

In preferred embodiments, the front side of each intermediate block positively abuts against the second side of one of the cooler beams, and the rear side of each intermediate block positively abuts against the first side of another one of the cooler beams. Here and in the following, the term "intermediate block" refers to any block not being the first block or the last block of a cell row with regard to the first direction (i. e., when viewed in the first direction). Further, the term "end block" shall refer to each of the first block or last block in a cell row with regard to the first direction (or, equivalently, to any block not being an intermediate block as defined before).

In preferred embodiments, all blocks have the same dimension with regard to the first direction (in other words, all blocks have the same size when measuring along the first direction). In a preferred embodiment, all blocks comprise the same number of cells. In preferred embodiment, all cells are identically shaped.

In one embodiment of the battery system, each of the cooler beams positively abuts to one of the front side and the rear side of at least one block of each cell row.

In the afore-described embodiment, each of the intermediate cooler beams is arranged such that both, its first and second side, are intersected by a longitudinal center axis of each of the cell rows. Here and in the following, the term "intermediate cooler beam" refers to any cooler beam arranged between two blocks with regard to the first direction. Further, the term "end cooler beam" shall refer to any one of the first cooler beam and the last cooler beam with regard to the first direction.

In a preferred embodiment, each of the cooler beams - except for the end cooler beams - positively abuts to one of the rear side of one block of each cell row and to the front side of the next block (with regard to the first direction) of that cell row.

In a preferred embodiment, the first cooler beam (with regard to the first direction) positively abuts (with its second side) against the front side of the first blocks of each cell row. Further, in a preferred embodiment, the last cooler beam (with regard to the first direction) positively abuts (with its first side) against the rear side of the last blocks of each cell row.

In one embodiment of the battery system, all cell rows comprise the same number of blocks. Further, when viewing into the first direction, for each of the cell rows, the rear side of the first block positively abuts to the first side of one of the cooler beams and the front side of the last block positively abuts to the second side of one of the cooler beams. For each block being arranged, in one of the cell rows, between the first block and the last of this cell row when viewing into the first direction, the front side of that block positively abuts to the second side of one of the cooler beams and the rear side of that block positively abuts to the first side of one of the cooler beams.

In the afore-described embodiment, each intermediate block abuts with its front side to a cooler beam and its rear side to another cooler beam. Thus, when coolant is guided through the main channels and thus through the beams, each intermediate block is cooled at its front side and its rear side. Further, any one of the end blocks abuts with at least one of its front side and its rear side to a cooler beam. Thus, when coolant is guided through the main channels and thus through the beams, each end block is cooled at least at one of its front side and its rear side.

Preferably, with regard to the first direction, the first cooler beam is arranged in front of each of the first blocks, and the front side of each first block positively abuts to the second side of the first cooler beam. Preferably, with regard to the first direction, the last cooler beam is arranged behind of each of the last blocks, and the rear side of each last block positively abuts to the first side of the last cooler beam. Thus, when coolant is guided through the main channels and thus through the beams, each end block is cooled at its front side and at its rear side.

For any two neighbored cooler beams with regard to the first direction (i. e., for any two cooler beams arranged consecutively along the first direction), the cells arranged between these two neighbored cooler beams may be grouped together into one group (cell group), and the cells of this group may be electrically connected to one another. For each cell, the first terminal may be a negative terminal and the second terminal may be a positive terminal, or alternatively, the first terminal may be a positive terminal and the second terminal may be a negative terminal. Then, in either case, for each of the groups, an order (sequence) of the cells may be defined (i. e., chosen) such that the cells in the group are ordered from a first cell to a last cell, and the second terminal of each cell in the group - except for the last cell in the group - may be connected to the first terminal of the next cell in the group according to the chosen numbering. Then, each terminal of any cell in the group is connected to another cell in the group except for the first terminal of the first cell and the second terminal of the last cell. Further, the first terminal of the first cell in the group may be connected to a second terminal of the last cell of another group or, alternatively, may serve as a first terminal for the battery system. Also, the second terminal of the last cell in the group may be connected to a first terminal of the first cell of another group or, alternatively, may serve as a second terminal for the battery system. Then, only one electrical connection is required to connect a cell group to another cell group. Thus, any two cell groups being neighbored with regard to the first direction (but separated from each other by a cooler beam) may be electrically connected to each other using a single electrical connection (such as a busbar), which is leaded such that it is thermally connected to the cooler beam between these neighbored cell groups. For example, this electrical connection abuts a top side or a bottom side of the cooler beam. Alternatively, this electrical connection may be led through the cooler beam. In the latter case, of course, it should be electrically separated from the main channel integrated in the respective cooler beam.

As cells of each cell row are comprised in one group, the cells between any two neighbored cooler beams are electrically connected to each other across the cell rows. The connections between the cells may be realized by busbars.

In one embodiment of the battery system, each block comprises at most two cells.

In one embodiment of the battery system, each block comprises a single cell.

In other words, according to the first alternative, in any cell row, the number of cells in each block of the cell row equals one or two. In an embodiment of the first alternative, in any cell row, the number of cells in each block of the cell row equals two. Further, according to the second alternative, in any cell row, the number of cells in each block of the cell row equals one.

In one embodiment of the battery system, each of the first and second sides of the blocks that positively abuts against a cooler beam is mechanically fixated to the respective cooler beam. For example, the first or second side of a block may be adhered to the respective cooler beam.

In one embodiment of the battery system, each of the first and second sides of the cells that positively abuts against another cell is mechanically fixated to the respective cooler beam. For example, the first or second side of a cell may be adhered to the other cell.

The cooler beams may each comprise a mechanically stable material. The cooler beams may each comprise a thermally conductive material. The cooler beams may each be made of steel or comprise steel.

In one embodiment of the battery system, each of the cooler beams comprises a pipe extending along the second direction. Further, the pipe has a first planar side portion forming, at the exterior surface, the first planar side of the cooler beam that comprises the pipe. Also, the pipe has a second planar side portion forming, at the exterior surface, the second planar side of the cooler beam that comprises the pipe.

In the afore-described embodiment, the main channels system integrated into a beam are formed by the respective pipe. The pipes may each have a bottom portion and a top portion (with respect to the third direction). The top portion connects the first and second side portions in a top area to each other (e. g., the top portion connects the upper edges of the first and second side portions with each other). The bottom portion connects the first and second side portions in a lower area to each other (e. g., the bottom portion connects the lower edges of the first and second side portions with each other). Each of the bottom and the top portion of the pipe may have a planar exterior surface.

In one embodiment of the battery system, each of the cooler beams comprises an aluminum cooler core arranged between two thermally insulating layers. The thermally insulating layers may be mica layers.

In one embodiment of the battery system, the aluminum cooler core comprises a first wall and a second wall, the first and second wall each extending along the second direction and arranged opposite to each other with regard to the first direction, wherein, when viewed in the first direction, the first wall is arranged in front of the second wall.

The first wall may have a planar side facing against the first direction, this planar side face forming the first planar side of the cooler beam that comprises the aluminum cooler core. Correspondingly, the second wall may have a planar side facing into the first direction, this planar side face forming the second planar side of the cooler beam that comprises the aluminum cooler core.

In one embodiment of the battery system, for each of the cooler beams, the main channel integrated into this beam comprises: at least one or more first cooling pipes each extending along the second direction and arranged on a side of the first wall facing the second wall; and at least one or more second cooling pipes each extending along the second direction and arranged on a side of the second wall facing the first wall.

In other words, on each of the inner sides of the walls of the aluminum cooler core, one or more cooling pipes are arranged. Then, the cooling pipes each allow for guiding a coolant near to the inner sides of the walls. The cooling pipes may be made of aluminum. The cooling pipes may be directly connected or fixated to the inner sides of the walls, e. g., by welding. This allows for a good heat transfer between the walls and a coolant flowing in the cooling pipes.

In a main channel according to the afore-described embodiment, the number of first cooling pipes may be equal to the number of second cooling pipes. Then, the main channel comprises a number of pairs, each pair comprising one first and one second cooling pipe. In each pair, the first and second cooling pipe may be arranged opposite to each other, i. e., a longitudinal center axis of the first cooling pipe of that pair and a longitudinal center axis of the second cooling pipe of that pair may be arranged in a same plane being parallel to the x-y-plane of the above-defined coordinate system.

In one embodiment of the battery system, the first wall and the second wall are connected to each other by rods or ribs, and each of the rods or ribs extends between one of the first cooling pipes and one of the second cooling pipes.

Thereby, each of the rods or ribs preferably extends between a portion of a first cooling pipe facing the second wall and a portion of a second cooling pipe facing the first wall. In an embodiment, the rods have each an elongated shape extending parallel to the first direction. In one embodiment, the ribs have each a planar shape extending parallel to the first direction and parallel to the second direction.

In an embodiment of the battery system, for any two blocks being separated from each other by one of the cooler beams and being electrically connected to each other by an electrical connection, the electrical connection is thermally connected to the cooler beam separating these blocks.

The electrical connection may be a wire or a busbar. The wire or busbar may be attached to a top side or a bottom side of the cooler beam separating the blocks electrically connected by this wire or busbar. Alternatively, this wire or busbar may be led through the cooler beam. In the latter case, of course, the wire or busbar should be electrically separated from the main channel integrated in the respective cooler beam.

In preferred embodiments, each of the main channels comprises an inlet and an outlet. In cases, wherein some or all of the main channels comprise each a plurality of (sub-)channels or pipes, the inlet of a respective main channel may be configured for supplying each of the (sub-)channels or pipes of that main channel with a coolant supplied into the inlet, and, correspondingly, the outlet of a respective main channel may be configured for discharging the coolant received from each of the (sub-)channels or pipes of that main channel.

In one embodiment, the battery system further comprises a coolant supply channel and a coolant discharge channel. The inlet of each main channel is connected with the coolant supply channel and an outlet of main channel system is connected with the coolant discharge channel. Then, each of the main channels can be supplied with coolant from the supply channel, and each of the main channels can discharge coolant into the discharge channel. In other words, the main channels can be considered as being connected in parallel within the channel system. The supply channel may comprise an inlet configured for being connected to the supply means of a cooling system. The discharge channel may comprise an outlet for being connected to a coolant receiving means of a cooling system configured for receiving discharged coolant. The supply channel and the discharge channel may be members of the channel system of the battery system.

In one embodiment, when viewing into the first direction, the outlet of each main channel - except for the last channel - is connected with the inlet of the next main channel (i. e., the following main channel with regard to the first direction) via a connection channel. Thus, coolant supplied into the inlet of the first main channel will consecutively flow through each of the following main channels. After having flown through the last main channel, the coolant will be discharged by the outlet of the last main channel. In other words, the main channels can be considered as being connected in series within the channel system.

The inlet of the first main channel may be configured for being connected to the supply means of a cooling system. The outlet of the last main channel may be configured for being connected to a coolant receiving means of a cooling system configured for receiving discharged coolant.

Further, the inlets and outlets of the main channels may be arranged such that at the ends of the main channels pointing against the second direction, inlets and outlets are arranged in an alternating manner when viewed into the first direction. Then, also at the ends of the main channels pointing into the second direction, inlets and outlets are arranged in an alternating manner when viewed into the first direction. The connection channels may each be members of the channel system of the battery system. Thus, in such embodiments, the channel system has a meandering shape.

In each of the described aspects and embodiments, the roles of the "outlets" and "inlets" can be switched, i. e., any "inlet" can be regarded as an "outlet" and any "outlet" is regarded as an "inlet" in the above description. The above-described topologies of the channel system (i. e., the described possibilities, how the various channels comprised in the channel system may be connected with each other irrespectively of the special geometric design) are not affected by such a switch. However, if applicable, also the roles of the supply channel and the discharge channel of the battery system have to be exchanged then.

In one embodiment, the battery system comprises a cooling system configured for being activated and deactivated; a battery management unit (BMU); and a detection system configured for detecting, for some or all of the cells, whether a thermal event occurs in the cell. The detection system is further configured for sending a signal to the battery management unit, when a thermal event has been detected. Further, the battery management unit is configured for receiving a signal from the detection system and for activating the cooling system upon receiving a signal from the detection system. The cooling system is further configured for suppling, when being activated, each of the main channels with a coolant.

The thermal event can be, for example, a thermal run-away. The thermal event may be defined by a predefined threshold temperature value. The detection of a thermal event may be realized by detecting, whether the temperature of a cell comprises in the battery system exceeds the predefined threshold temperature value.

A second aspect of the present disclosure relates to a vehicle comprising at least one battery system according to the first aspect.

In the vehicle, the battery system is preferably arranged such that the cooler beams extend perpendicular or essentially perpendicular to the normal driving direction of the vehicle. In other words, the cooler beam may each be configured as cross beams. However, in alternative embodiments, the cooler beams may each be configured, for example, as longitudinal beams.

In preferred embodiments, the cooler beams are arranged relative to the blocks with regard to the third direction such that, for each of the blocks, the complete front side of that block positively abuts against the second side of one of the cooler beams, and/or the complete rear side of that block positively abuts against the first side of another one of the cooler beams. Then, a maximum mechanical contact between the respective front or rear side of a block and the cooler beam, against which the side positively abuts is established and, as a consequence thereof, it is enabled a maximum heat transfer between the respective front or rear side of a block and the cooler beam, against which the side positively abuts.

In each of the described aspects and embodiments, the roles of the "outlets" and "inlets" can be switched, i. e., any "inlet" can be regarded as an "outlet," if, at the same time, any "outlet" is regarded as an "inlet" in the above description. The above-described topologies of the channel system (i. e., the described possibilities, how the various channels comprised in the channel system may be connected with each other irrespectively of the special geometric design) are not affected by such a switch. However, if applicable, also the roles of the coolant supply channel and the coolant discharge channel of the battery system have to be exchanged then.

Generally, some of the characteristics of the aspects or certain embodiments thereof can be summarized as follows: Instead of a typically conventional cooling provided at the bottoms of the cells, the cooler beans are installed so as to intersect the cell rows. For example, after every cell or every second cell, a thin cooler beam is crossing each or at least some of the cell rows. With that concept, a certain number or even each of the cells can be cooled at one of the large (long) sides. In case of a thermal run-away occurring in one (or more) of cells, this will be detected by the BMU (which has to be connected as an external device to the battery system in certain embodiments of the battery system according to the invention or is already integrated in the battery system according to alternative embodiments of the invention), which will wake up the vehicle and demand an active cooling. The active cooling will help to transport away the produced energy from the cell affected by the thermal run-away and to protect the following cell in the cell row. The long side of the cell has the best thermal conductivity to the internal anode/cathode stack or jelly rolls and has the biggest surface area. The small sides and the bottom of the cell shall as good as possible be isolated against further mechanical structure, in best case by air or minimal contact. The cells shall be also mechanical connected to the cooler which also may act as a mechanical cross beam.

### Specific Embodiments

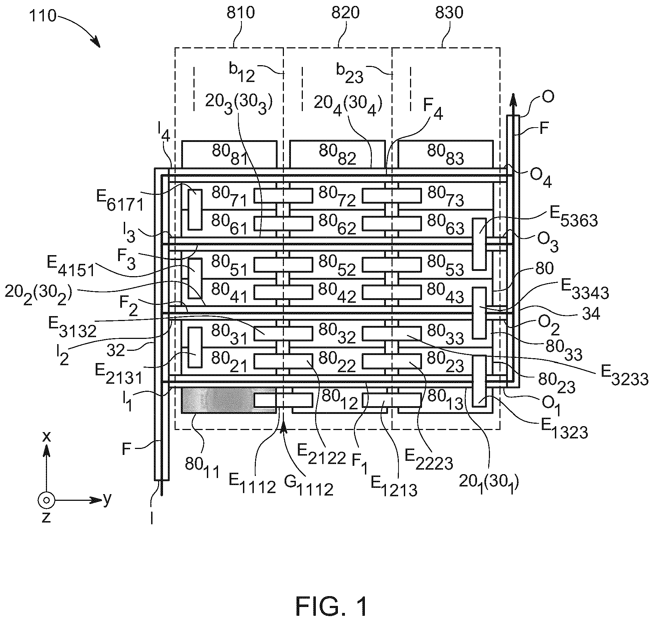

Figure 1 is a schematic top view on an embodiment of battery system (without a housing) disclosed herein. To facilitate the description, a Cartesian coordinate system with the axes x, y, z has also been added to Fig. 1, wherein the x-y-plane is identical with the drawing plane of the figure, and the z-axis is orientated perpendicular to the drawing plane. In the shown example, the battery system 110 comprises three rows of battery cells (in the following simply referred to as "cell rows"). Specifically, the battery system 110 comprises a first cell row 810, a second cell row 820, and a third cell row 830. Each of the cell rows 810, 820, 830 extends in a direction parallel to the x-direction of the coordinate system, as schematically indicated by the rectangles with the dashed borders. The outer shape of all battery cells is identical. Specifically, the first cell row 810 comprises a plurality of cells 80ᵢ₁ with the index i ∈{1, 2, 3, 4, 5, 6, 7, 8}. Also, the second cell row 820 comprises a plurality of cells 80ᵢ₂ with the index i ∈{1, 2, 3, 4, 5, 6, 7, 8}. Correspondingly the second third row 830 comprises a plurality of cells 80ᵢ₃ with the with the index i ∈{1, 2, 3, 4, 5, 6, 7, 8}. Each of the cell rows 810, 820, 830 may comprise more battery cells (in the following also simply referred to as "cells") than depicted in Figure 1. In particular, further cells (not shown) may be arranged, in each of the cell rows 810, 820, 830, behind the respective last cells 80₈₁, 80₈₂, 80₈₃, when viewing into the x-direction. This is indicated by the dashed lines in the upper left portion of the dashed rectangles.

Along the y-direction, cells of the first cell row 810, the second cell row 820, and the third cell row 830 are lined up, side by side, with their respective lateral sides. Accordingly, each cell 80ᵢⱼ can be identified by its position with regard to the x-direction (by the first index i of the reference sign 80ᵢⱼ indicating the cell's position in the respective cell row, when viewing into the x-direction) and with regard to the y-direction (by the second index j of the reference sign 80ᵢⱼ indicating the cell row comprising the cell, wherein the cell rows are counted along the y-direction).

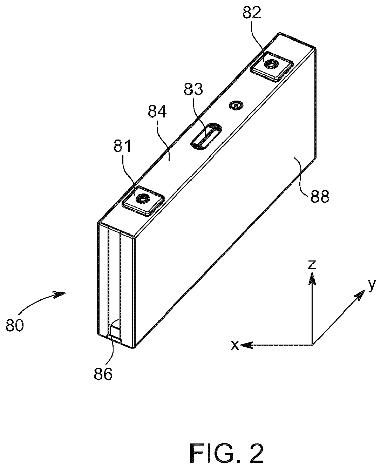

An exemplary design of the battery cells that can be used in embodiments of the disclosed battery system is schematically illustrated in Figure 2 showing an individual battery cell 80 with reference to a Cartesian coordinate system in a perspective view. The battery cell 80 could be any one of the identically shaped cells 80ᵢⱼ (i ∈{1, 2, 3, 4, 5, 6, 7, 8}, j ∈{1, 2, 3}) employed in the battery system 110 of Fig. 1 as described above. Specifically, the battery cell 80 has a prismatic (cuboid) shape. Hence, the battery cell 80 comprises six side faces: a top face 84 arranged opposite, with regard to the cell's body, to a bottom face (not shown), a first lateral face 86 and a second lateral face arranged opposite to the first lateral face (not shown in Fig. 2), as well as a front face 88 arranged opposite to a rear face (not shown in Fig. 2). Each of the side faces has an essentially planar shape. As can be seen from Fig. 2, the area of the front face 88 (and the rear face being essentially congruent to the front face 88) is larger than any one of the top face 84 and the first lateral face 86 (and thus, the front face 88 is also larger than any one of the second lateral face being congruent to the first lateral face 86 and the bottom face being congruent to the top face 84).

On the top face 84 of the battery cell 80 (i. e., the battery cell's side surface facing into the z-direction of the coordinate system), a first terminal 81 and a second terminal 82 are arranged. The terminals 81, 82 allow for an electrical connection of the battery cell 80. The first terminal 81 may be the negative terminal of the battery cell 80, and the second terminal 82 may be the positive terminal of the battery cell 80. Accordingly, the top face 84 may be also referred to in the following as the "terminal side" of battery cell 80. Between the first terminal 81 and the second terminal 82, a venting outlet 83 may be arranged in the terminal side 84. The venting outlet 83 is configured for exhaling vent gases out of the battery cell 80, which may have been generated inside the battery cell 80, e. g., during a thermal event occurring in the battery cell 80 such as a thermal run-away. Before being output via the venting outlet 83, the vent gas may pass a venting valve (not shown) arranged inside the battery cell 80. By stacking a plurality of battery cells each being designed like the battery cell 80 shown in Fig. 2 along the x-direction, a stack of battery cells is created like, e. g., any one of the three stacks shown in Fig. 1. Accordingly, each of the cells 80ᵢⱼ depicted in Fig. 1 may be orientated as indicated by the coordinate system of Fig. 2, i. e., the front face of each cell 80ᵢⱼ faces against the z-direction, the rear face of each cell 80ᵢⱼ faces into the z-direction, the first lateral face of each cell 80ᵢⱼ faces against the y-direction, the second lateral face of each cell 80ᵢⱼ faces into the y-direction, the bottom face of each cell 80ᵢⱼ faces against the z-direction, and the top face of each cell 80ᵢⱼ faces into the z-direction.

In the embodiment of the battery system 110 shown in Fig. 1, a plurality of cooler beams is arranged, comprising a first cooler beam 20₁, a second cooler beam 20₂, a third cooler beam 20₃, and a fourth cooler beam 20₄ arranged in sequence along the x-direction and each extending along the y-direction. Each of the cooler beams 20₁, 20₂, 20₃, 20₄ comprises a planar first side perpendicular to the drawing plane (i. e., parallel to the y-z-plane of the coordinate system) and facing against the x-direction as well as a planar second side being likewise perpendicular to the drawing plane but facing into the x-direction. Accordingly, each of the first and second side of each of the cooler beams 20₁, 20₂, 20₃, 20₄ is arranged parallel to each of the front and rear face of each of the cells 80ᵢⱼ employed in the battery system 110.

Further, each of the cooler beams 20₁, 20₂, 20₃, 20₄ intersects each of the cell rows 810, 820, 830. Specifically, the cell rows 810, 820, 830 are intersected by the first cooler beam 20₁ such that, in each of the cell rows 810, 820, 830, the respective first cell 80n, 80₁₂, 80₁₃ is separated, along the x-direction, from the respective second cell 80₂₁, 80₂₂, 80₂₃. Likewise, the cell rows 810, 820, 830 are intersected by the k-th cooler beam 20ₖ (with k ∈{2, 3, 4}) such that, in each of the cell rows 810, 820, 830, the respective (2k-1)-th cell 80_{(2k-1),1}, 80_{(2k-1),2}, 80_{(2k-1),3} is separated, along the x-direction, from the respective subsequent (2k)-th cell 80_{(2k),1}, 80_{(2k),2}, 80_{(2k),3} (the first and second indices in the reference sign indicating the cells being separated here by a comma to avoid a misinterpretation, in particular a confusion with multiplication). This scheme may apply correspondingly for further cooler beams and cells that may be arranged, in the x-direction, behind the cells 80₈₁, 80₈₂, 80₈₃ (i. e., behind the last cells shown in the figure).

Due to the afore-described arrangement, each of the cell rows 810, 820, 830 is split into several cell blocks (in the following also shortly referred to as "blocks"). For example, with respect to the cells shown in Fig. 1, the first cell row 810 is split into a first cell block comprising the only cell 80₁₁, a second cell block comprising two cells 80₂₁ and 80₃₁, a third cell block comprising likewise two cells 80₄₁ and 80₅₁, a fourth cell block comprising again two cells 80₆₁ and 80₇₁, and a fifth cell block (last cell block shown in Fig. 1 for the first cell row 810) comprising the only cell 80₈₁. As can be further seen from Fig. 1, the second cell row 820 and the third cell row 830 are each split, by the cooler beams 20₁, 20₂, 20₃, 20₄, in a corresponding manner.

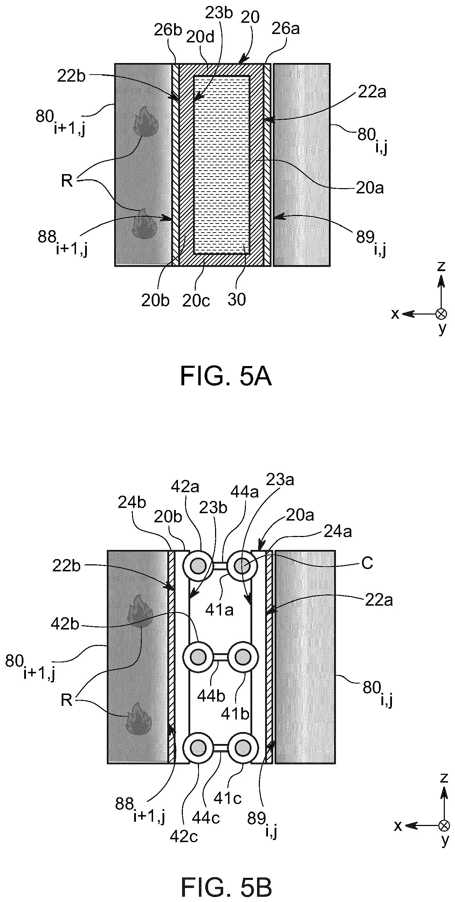

As can be further seen in Fig. 1, each of the intermediate blocks (i. e., each block except for the first block and the last block of each cell row 810, 820, 830) positively abuts with its front side (formed by the front face of the first cell in the respective block with respect to the x-direction) against the second side of one of the cooler beams 20₁, 20₂, 20₃, 20₄, and likewise, also positively abuts with its rear side (formed by the rear face of the last (second) cell in the respective block with respect to the x-direction) against the first side of another one of the cooler beams 20₁, 20₂, 20₃, 20₄. Due to the above-described arrangement of the cells 80ᵢⱼ and the cooler beams 20₁, 20₂, 20₃, 20₄ in the embodiment of the battery system shown in Fig. 1, each of the intermediate blocks comprises exactly two cells. Hence, each of these two cells positively abuts with one of its front or rear face against one of the cooler beams 20₁, 20₂, 20₃, 20₄ and can thus be cooled by the abutting cooler beam, if the cooler beam has a lower temperature than the cell. This can be achieved by cooling the cooler beams 20₁, 20₂, 20₃, 20₄ by a coolant guided through the cooler beams 20₁, 20₂, 20₃, 20₄, as will be described later with reference to Figs. 5A and 5B.

In contrast to the intermediate blocks (i. e., the first, second, and fourth block of each of the cell rows 810, 820, 830), the first blocks (with regard to the x-direction) of each of the cell rows 810, 820, 830 comprise each only a single battery cell 80n, 80₁₂, 80₁₃. As can be seen in Fig. 1, each of these battery cells 80₁₁, 80₁₂, 80₁₃ positively abuts, with its respective rear face, against the first side of the first cooler beam 20₁. Hence, each of these cells 80₁₁, 80₁₂, 80₁₃ can be cooled by the first cooler beam 20₁, if the first cooler beam 20₁ has a lower temperature than the cell. With regard to the cells shown in Fig. 1, this applies in a similar manner also to the last depicted blocks, i. e., each of these battery cells 80₈₁, 80₈₂, 80₈₃ positively abuts, with its respective front face, against the second side of the fourth cooler beam 20₄. Thus, each of these cells 80₈₁, 80₈₂, 80₈₃ can be cooled by the fourth cooler beam 20₄, if the fourth cooler beam 20₄ has a lower temperature than the cell.

To achieve a maximum heat exchange between a cooler beam and an abutting cell, a tight mechanical contact between the cooler beam and the cell is desirable in the area, where the cooler beam abuts to the cell. Thus, the cell can be mechanically affixed to the cooler beam with the front or rear face, with which the cell positively abuts against the first or second side of the cooler beam. The mechanical fixation can be achieved, for example, by using an adhesive.

As already pointed out above with reference to Fig. 2, the front face and the rear face of each cell are the cell's side faces having the largest areas in comparison to any one of the top and bottom face as well as the first and second lateral face. Since, as described before with reference to Fig. 1, either the front face or the rear face of each cell 80ᵢⱼ abuts to one of the cooler beams 20₁, 20₂, 20₃, 20₄, a large area is provided for the heat exchange between the cell and the abutting cooler beam, which provides for an excellent cooling of the cell, if the cooler beam has a lower temperature than the cell.

On the other hand, the heat exchange between the cells 80ᵢⱼ and other parts of the battery system than the cooler beams, e. g., a casing or housing (not shown), should be kept as low as possible. In particular, as already pointed out above in the introductory part, the escape of flames out of the battery system should be avoided or at least considerably protracted. Accordingly, all other side faces than the front face and the rear face should be thermally insulated from the environment for each of the cells 80ᵢⱼ.

To that end, between any two cells being neighbored to each other with regard to the y-direction, a space or an air-gap may be inserted. Accordingly, in the embodiment of the battery system 110 shown in Fig. 1, the complete cell rows 810, 820, 830 are arranged spaced apart from each other with regard to the y-direction. Here, those spaces or air-gaps are arranged between the cells 80ᵢ₁ (i ∈{1, 2, ..., 8}) of the first cell row 810 and the respective opposite cells 80ᵢ₂ (i ∈{1, 2, ..., 8}) of the second cell row 820 in the area indicated by the dashed line b₁₂, and, correspondingly, between the cells 80ᵢ₂ (i ∈{1, 2, ..., 8}) of the second cell row 820 and the respective opposite cells 80ᵢ₃ (i ∈{1, 2, ..., 8}) of the third cell row 830. For example, the cell 80₁₁ shown at the left bottom corner in the top-view of Fig. 1 is separated by the adjacent cell 80₁₂ by a space or air-gap G₁₁₁₂.

The battery system 110 may be arranged on a carrier framework (not shown) comprising a base portion (not shown) that supports the cells 80ᵢⱼ as well as the cooler beams and possibly other equipment of the battery system 110. Accordingly, the cells 80ᵢⱼ are each separated also from the base portion by a space or an air-gap (not shown). However, to provide for mechanical stability, stilts (not shown) may be arranged protruding from the base portion into the z-direction, the stilts being connected mechanically to the bottom faces of the cells 80ᵢⱼ. Then, the mechanical connections between the bottom faces of the cells 80ᵢⱼ and the base portion are reduced to a minimum, and thus, also the heat exchange between the cells 80ᵢⱼ and the base portion is minimized.

Of course, when the battery system is arranged in a housing having cover (not shown) arranged above the cells 80ᵢⱼ with regard to the z-direction, also the cover should be positioned so as to have a distance to the top sides of each of the cells 80ᵢⱼ. This applies, with regard to the side walls of the housing, in a similar manner to the front faces of the first cells 80n, 80₁₂, 80₁₃ of the cell rows 810, 820, 830 as well as to the rear faces of the last cells of each of the cell rows 810, 820, 830, if no cooler beam is arranged between these faces and the respective adjacent side wall of the housing.

In a battery system, the cells are electrically interconnected to each other. For example, the cells may be connected to each other in series or in parallel. Alternatively, several clusters of cells may be formed (e. g., the cells of each stack of battery cells forming one cluster) within the battery system, and the cells of each cluster may be connected to each other in series, whereas the clusters are connected to each other in parallel. In the battery system according to the embodiment shown in Fig. 1, the cells are connected 80ᵢⱼ in series. The electrical connection is established by busbars such as the busbar E₁₁₁₂, electrically connecting the cell 80₁₁ in left bottom corner in the top-view of Fig. 1 with the cell 80₁₂ arranged next to it with regard to the y-direction.

However, as an electrical connector (e. g. a metal), each of the busbars is typically may also cause an undesired heat transfer between any two connected cells, or even, when the connected cells are arranged on different sides of a cooler beam, and unwanted heat exchange between different cell blocks across the cooler beam, thereby deteriorating the effect of the cooler beam as a heat barrier between the cell blocks arranged on its different sides. Hence, it is desirable that the number of electric connections between cells arranged on different sides of a cooler beam is reduced to a minimum, i. e., at least in case of a series connection of the cells 80ᵢⱼ of the battery system 110 as in the present case, is reduced to 1. This can be achieved by an arrangement of the electrical connections (busbars) as shown in Fig. 1 and described in the following.

Due to the before-described arrangement of the cooler beams 20₁, 20₂, 20₃, 20₄, the cells 80ᵢⱼ are assembled in several groups. A first group may comprise any cell 80n, 80₁₂, 80₁₃ arranged, when viewed into the x-direction, in front of the first cooler beam 20₁. In other words, the first group comprises the first blocks of each of the cell rows 810, 820, 830. Further, a second group may comprise any cell 80₂₁, 80₂₂, 80₂₃, 80₃₁, 80₃₂, 80₃₃ being arranged, when viewed into the x-direction, between the first cooler beam 20₁ and the second cooler beam 20₂. In other words, the second group comprises the second blocks of each of the cell rows 810, 820, 830. The remaining groups are defined in a corresponding manner, e. g., a third group is given by the cells 8041, 8042, 8043, 8051, 8052, 8053 being arranged between the second cooler beam 202 and the third cooler beam 20₃, and a fourth group is given by the cells 80₆₁, 80₆₂, 80₆₃, 80₇₁, 80₇₂, 80₇₃ being arranged between the third cooler beam 20₃ and the fourth cooler beam 20₄.

Then, the cells of each group can be electrically connected with each other in series. In other words, since each of the cells comprises a first terminal (e. g., a negative terminal) and the second terminal (e. g., a positive terminal), the second terminal of each of the cells comprised in a group - except for one cell - may be connected with a first terminal of a further cell. For example, with reference to Fig. 1, the cell 80₁₁ in the first group is connected to the adjacent cell 80₁₂ in the first group by a busbar E₁₁₁₂, and the latter cell 80₁₂ is connected, in turn, with the next cell 80₁₃ (with respect to the y-direction) in the first group by a further busbar E₂₂₂₃. Further, concerning the cells 80₂₃, 80₂₂, 80₂₁, 80₃₁, 80₃₂, 80₃₃ of the second group, any two subsequent cells with regard to the order of their foregoing mentioning, are connected in series by respective busbars E₂₂₂₃, E₂₁₂₂, E₂₁₃₁, E₃₁₃₂, and E₃₂₃₃. This applies in a corresponding manner to any of the further groups. Thus, for the electric connections required within each of the groups, no electric connection is required that crosses one of the quarter beams 20₁, 20₂, 20₃, 20₄. However, in each group, there is one cell left so far with an unconnected first terminal (this terminal may serve as the first terminal of this group), and there is also a further cell left with an unconnected second terminal (the latter terminal may serve as the second terminal of this group). Then, the first terminal of the first group may serve as a first terminal of the complete battery system 110, and the second terminal of the last group may serve as a second terminal of the complete battery system 110. Further, the second terminal of each group - except for the last group - may be connected to the first terminal of the subsequent group with regard to the x-direction. This has the advantage that only the last-mentioned connections are required to cross the cooler beam. For example, the rightmost cell 80₁₃ of the first group is connected, via the busbar E₁₃₂₃ arranged across the first cooler beam 20₁, with the cell 80₂₃ in the bottom right corner of the first group. Further, the cell 80₃₃ in the upper right corner of the second group is connected, via the busbar E₄₃₅₃ arranged across the second cooler beam 20₂, with the cell 80₄₃ in the bottom right corner of the third group, and the cell 80₅₃ in the upper right corner of the third group is connected, via the busbar E₅₃₆₃ arranged across the third cooler beam 20₃ with the cell 80₆₃ in the bottom right corner of the fourth group. This way of electrically connecting the individual groups to each other can be continued in a corresponding manner for each of the further groups comprised in the battery system 110. Then, it is only one electric connection per busbar required that crosses the busbar. Hence, the heat transfer between different groups - and thus the risk for the propagation or spreading of thermal events across the cells - via the electrical connections is minimized.

The cooler beams 20₁, 20₂, 20₃, 20₄ may provide or increase mechanical stability of the battery system 110. At any case, the cooler beams 20₁, 20₂, 20₃, 20₄ should be configured to resist the pressure arising within the cell rows 810, 820, 830, i. e., not only in case of thermal events but also due to swelling processes during normal operation states of the battery system 110. However, the main function of the cooler beams 20₁, 20₂, 20₃, 20₄ according to the present disclosure is their ability to cool the battery system 110 by cooling the battery cells that directly abut against (one or two of) the cooler beams 20₁, 20₂, 20₃, 20₄. Of course, in order to provide this cooling effect on the respective adjacent cells 80ᵢⱼ, the cooler beams 20₁, 20₂, 20₃, 20₄ themselves have each to be equipped with a suitable cooling means. According to the disclosure, the cooling means is provided by a main channel, i. e., a main channel is thus integrated into each of the cooler beams 20₁, 20₂, 20₃, 20₄. Specifically, in each of the cooler beams 20₁, 20₂, 20₃, 20₄, a respective main channel 30₁, 30₂, 30₃, 30₄ extends along the complete length of the cooler beam. Due to the schematic character of Fig. 1, the main channels 30₁, 30₂, 30₃, 30₄ can be identified with the cooler beams 20₁, 20₂, 20₃, 20₄ in this drawing. A detailed explanation as to the integration of the main channels 30₁, 30₂, 30₃, 30₄ into the cooler beams 20₁, 20₂, 20₃, 20₄ will be given below with reference to Figs. 5A and 5B.

Each of the main channels comprises a respective inlet I₁, I₂, I₃, I₄ and a respective outlet O₁, O₂, O₃, O₄. The inlets I₁, I₂, I₃, I₄ of the main channels 30₁, 30₂, 30₃, 30₄ are each configured for being connected with a suitable coolant supply means (see below). Correspondingly, the outlets O₁,O₂, O₃, O₄ of the main channels 30₁, 30₂, 30₃, 30₄ are each configured for being connected with the suitable discharge means (see below), which receives the coolant discharged by the outlets O₁,O₂, O₃, O₄ of the main channels 30₁, 30₂, 30₃, 30₄. Accordingly, when being supplied with a coolant through the respective inlets I₁, I₂, I₃, I₄, a respective flow of coolant F₁, F₂, F₃, F₄ is guided through each of the main channels 30₁, 30₂, 30₃, 30₄, as schematically indicated in Fig. 1. The coolant is a fluid having a low temperature (e. g., a temperature in the range of 20°C to 55°C) in comparison to the cells 80ᵢⱼ when being supplied to the main channels 30₁, 30₂, 30₃, 30₄ via the respective inlets I₁, I₂, I₃, I₄. Depending on the construction of the cooler beams 20₁, 20₂, 20₃, 20₄ and integration of the main channels into the latter, the cooler beams 20₁, 20₂, 20₃, 20₄ are either identical with the main channels 30₁, 30₂, 30₃, 30₄ or comprise one or more pipes being mechanically connected with respective interior sides of the cooler beams 20₁, 202, 203, 204 (see the detailed description as to Figs. 5A and 5B). Accordingly, when a coolant is guided through a main channel 20₁, 20₂, 20₃, 20₄, a heat exchange occurs between the coolant and the material of the main channel 20₁, 20₂, 20₃, 20₄. On the other hand, the cooler beams 20₁, 20₂, 20₃, 20₄ are each mechanically connected (directly or indirectly, see below as to Figs. 5A and 5B), by their respective first and/or second sides, with the front and/or rear faces of battery cells arranged adjacent (with regard to the x-direction) to the cooler beams 20₁, 20₂, 20₃, 20₄.

Accordingly, a heat exchange occurs between the coolant flowing through a main channel and the battery cells mechanically connected to the cooler beam, into which the main channel is integrated, when the temperature of these cells exceeds the temperature of the coolant. Specifically, heat energy is transferred from the cells to the coolant through the material of the respective main channel. In other words, the cells are cooled. Note that the heat exchange between a cell being mechanically connected to the cooler beam and the coolant guided through the cooler beam by means of the integrated main channel depends on the area of the mechanical connection between the cell and the cooler beam. More specifically: the larger the area of the mechanical connection between the cell and the cooler beam, the larger is the flow of heat energy (heat transfer) from the cell to the cooler beam and further to the coolant. As already described above, each of the cells in the embodiment of the battery system 110 as depicted in Fig. 1, abuts with one of its largest side faces (i. e., either with its respective front face 88 or its respective rear face) against one of the cooler beams 20₁, 20₂, 20₃, 20₄. Thus, the shown embodiment allows for an excellent cooling of each of the cells 80ᵢⱼ comprised in the battery system 110.

However, the battery system 110 not only provides for an excellent cooling of each of the individuals cells but also prevents the propagation of a thermal event (e. g., a thermal runaway) within the plurality of cells or at least considerably retards such a propagation. This applies in particular to the propagation of a thermal event across different groups of battery cells (see above as to the definition of a group in this context). For example, it may be the case that the cell 80₁₁ depicted in the bottom left corner with regard to the top-view of of Fig. 1 (i. e., the first cell of the first cell row 810) is affected by a thermal run-away. This is indicated in Fig. 1 by the gray-scaled top side of that cell 80₁₁. Then, a propagation of the thermal event to the cell 80₂₁ arranged next to the affected cell 80₁₁ in the x-direction (i. e., the second cell of the first cell row 810) is avoided or at least retarded in several ways: (i) The afore-mentioned first cell 80₁₁ and second cell 80₂₁ of the first cell row 810 belong to different blocks of the first cell row 810 and are thus spatially separated from each other. (ii) Further, they are mechanically shielded from each other by means of the first cooler beam 20₁. (iii) However, these cells 80n, 80₂₁ are also thermally shielded from each other in that heat propagating from the first cell 80₁₁ of the first cell row 810 is transferred into the coolant F₁ flowing through the first main channel 30₁ integrated into the first cooler beam 20₁ and thus immediately taken away from the area between first cell 80₁₁ and second cell 80₂₁ of the first cell row 810 by the motion of the coolant F₁ into the y-direction, when the first main channel 30₁ is supplied with coolant via its inlet I₁. Accordingly, a further propagation of the heat generated in the cell 80₁₁ affected by the thermal run-away through the second side of the first beam 20₁ into the second cell 80₂₁ of first cell row 810 is prevented. After having passed the outlet O₁ of the first main channel 30₁, the heat generated in the cell 80₁₁ and received by the coolant F₁ flowing through the first main channel 30₁ is then discharged from the battery system 110 by a discharge means such as the discharge channel 34, which will be described in the following.

As pointed out above, for each of the main channels 30₁, 30₂, 30₃, 30₄, a coolant supply means and a coolant discharge means is required. For each of the main channels 30₁, 30₂, 30₃, 30₄, the respective coolant supply means is configured for being connected with the inlet of the main channel such that coolant provided by the coolant supply means flows via the inlet into the main channel. Correspondingly, for each of the main channels 30₁, 30₂, 30₃, 30₄, the respective coolant discharge means is configured for being connected with the outlet of the main channel such that coolant flowing out of the main channel via the outlet is received by the coolant discharge means.

In embodiments, each of the main channels may be connected, with their respective inlets, to the same coolant supply means. In other words, a single coolant supply means is used to supply each of the main channels with coolant. Also, in embodiments, each of the main channels may be connected, with their respective outlets, to the same coolant discharge means. In other words, a single coolant discharge means is used to receive the coolant discharge from each of the main channels. For example, in the embodiment of the battery system 110 illustrated in Fig. 1, the coolant supply means is realized by a coolant supply channel 32 and, correspondingly, the coolant discharge means is realized by a coolant discharge channel 34. The coolant supply channel 32 is connected to of the inlets I₁, I₂, I₃, I₄ of any one of the main channels 30₁, 30₂, 30₃, 30₄. Likewise, the coolant discharge channel 34 is connected with the outlets O₁,O₂, O₃, O₄ of any one of the main channels 30₁, 30₂, 30₃, 30₄. The coolant supply channel 32 comprises a main inlet I adapted for being connected with an external cooling system (not shown) configured for supplying the coolant supply channel 32 with the coolant F via the main inlet I. In the embodiment of the battery system 110 shown in Fig. 1, the coolant supply channel 32 is part of the battery system 110. In alternative embodiments, the coolant supply channel 32 may be part of the external cooling system. Also, the coolant discharge channel 34 comprises a main outlet O adapted for being connected with an external cooling system (not shown) configured for receiving the coolant F discharged from the coolant discharge channel 34 via the main outlet O. In the embodiment of the battery system 110 shown in Fig. 1, the coolant discharge channel 34 is part of the battery system 110. In alternative embodiments, the coolant discharge channel 34 may be part of the external cooling system.

As the coolant supply channel 32 supplies any one of the main channels 30₁, 30₂, 30₃, 30₄ with the coolant F, and the coolant discharge channel 34 receives the coolant discharged from each of the main channels 30₁, 30₂, 30₃, 30₄, the main channels 30₁, 30₂, 30₃, 30₄ can be considered as being connected in parallel within the channel system formed by the main channels 30₁, 30₂, 30₃, 30₄ together with the coolant supply channel 32 and the coolant discharge channel 34. Accordingly, the coolant F provided by the coolant supply channel 32 divides into several flows of coolant F₁, F₂, F₃, F₄ such that through each of the main channels 30₁, 30₂, 30₃, 30₄ (and thus, through each of the cooler beams 20₁, 20₂, 20₃, 20₄), one of these flows of coolant F₁, F₂, F₃, F₄ is guided, when the cooling system is operating and supplies coolant to the coolant supply channel 32. For each of the main channels 30₁, 30₂, 30₃, 30₄, the amount of coolant flowing through the channel and the velocity, with which the coolant flows through the channel, can be controlled, for example, by the pressure, with which the coolant is provided by the coolant supply channel 32 and/or by the cross-sectional flowing area(s) provided by the respective main channel.

To emphasize again some important properties of the battery system of Fig. 1, the following shall be remarked: To not reduce the thermal isolation effect of the cooler beams, the majority of the electrical connections among the cells (busbars) does not connect cells along the cell row (i. e., over or through the cooler beam). Instead of this, the majority of electrical connections interconnects the cells of different cell rows. For example, with reference to Fig. 1, the busbar E₁₁₁₂ from the hot cell 80₁₁ (depicted in the left bottom corner of the cell matrix) of the first cell row 810 is connected to the next cell 80₁₂ in the y-direction, which belongs to the second cell row 820. Thus, cell 80₁₂ is only connected over the busbar E₁₁₁₂ to the hot cell 80₁₁ but is still well cooled over its rear side abutting against the first cooler beam 20₁. However, there is still one busbar E₁₃₂₃ needed to electrically connect along the cell row direction (x-direction). This busbar from one cell block to the next (in the x-direction) has to be designed to minimize the heat transfer. This can be done by thermal connection of the busbar E₁₃₂₃ to the cooler (correspondingly for the busbars E₂₁₃₁, E₃₃₄₃, E₄₁₅₁, E₅₃₆₃, E₆₁₇₁ connecting any two neighbored of the following groups of cells, respectively; see above). With the shown busbar arrangement, the required number of electrical connections across (or through) cooler beams can be maximally reduced.

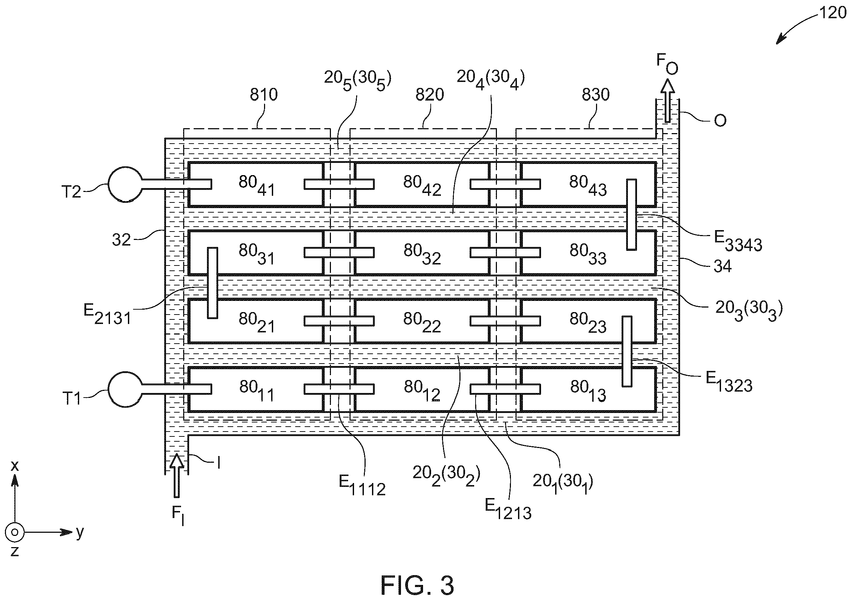

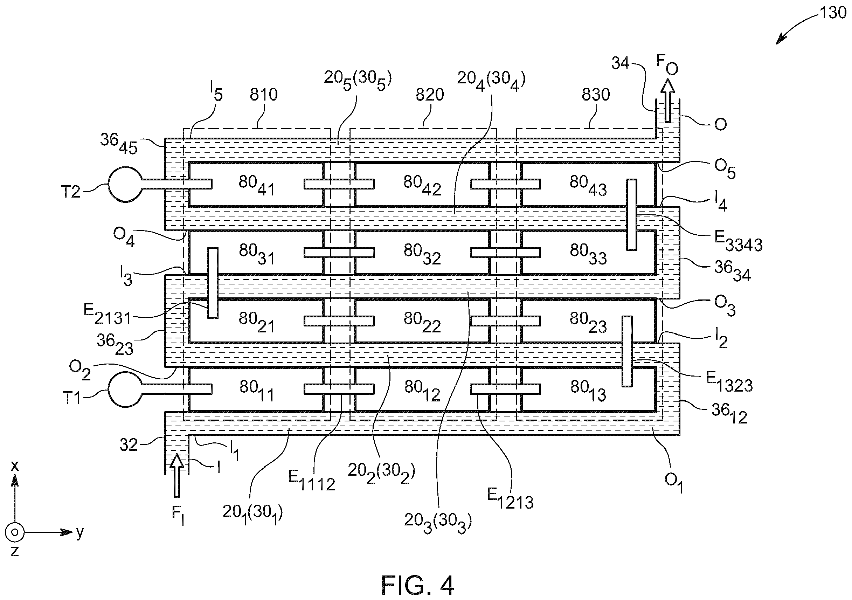

Two alternative embodiments of a battery system according to the present disclosure are schematically illustrated in Figures 3 and 4. Specifically, Fig. 3 provides a top view on a second embodiment of a battery system 120, and Fig. 4 provides a top view on a third embodiment of a battery system 130. Again, a Cartesian coordinate system with the axes x, y, z is depicted into the figure to facilitate the description by referring to directions parallel to the axis. Like the battery system 110 shown in Fig. 1, battery system 120 of Fig. 3 as well as battery system 130 of Fig. 4 comprises a first cell row 810, a second cell row 820, and a third cell row 830, as indicated by virtual rectangles marked by dashed lines. In each of these cell rows 810, 820, 830, the respective cells 80ᵢ₁, 80ᵢ₂, 80ᵢ₃ (with the first index i ∈{1, 2, 3, 4} denoting the position of the cell with respect to the x-direction and the second index referring to the respective cell row) are lined up along the x-direction. Further, the cell rows 810, 820, 830 are arranged in parallel to each other and lined up along the y-direction. For the sake of simplicity of the schematic illustration, each of the cell rows 810, 820, 830 of the depicted embodiments comprises only for battery cells. Of course, alternative embodiments could be obtained in that the battery system 120 or 130 is continued in the x-direction using the same arrangement pattern for the cells as shown in order to extend the battery system. Also, in alternative embodiments, further cell rows could be added along the y-direction in the same manner as shown for the depicted cell rows 810, 820, 830.

All cells 80ᵢⱼ (i ∈{1, 2, 3, 4}, j ∈{1, 2, 3}) in the battery system 120 or 130 have an identical prismatic (cuboid) shape and are orientated such that their respective front faces show against the x-direction and their respective rear faces show into the x-direction (cf. Fig. 2 and the respective description as to Fig. 1, where the cells are orientated in a similar manner). In each of the cell rows 810, 820, 830, the individual cells 80ᵢⱼ are spaced apart from each other with regard to the x-direction. A plurality of cooler beams 20₁, 20₂, 20₃, 20₄, 20₅ (in the following, the respective reference signs are simply referred to as 20ₖ with k ∈{1, 2, 3, 4, 5}) is arranged in the battery system 120 or 130, wherein each of cooler beams 20ₖ extends parallel to the y-direction. Specifically, a first cooler beam 20₁ is arranged in front of the first cells 80₁ⱼ (j ∈{1, 2, 3}) of each of the cell rows 810, 820, 830, when viewed into the x-direction. Further, a second cooler beam 20₂ extends through each of the spaces, which are formed between the first cells 80₁ⱼ (j ∈{1, 2, 3}) and the second cells 80₂ⱼ (j ∈{1, 2, 3}) of each of the cell rows 810, 820, 830, wherein the cells in each cell row are counted with respect to the x-direction. In a like manner, a third cooler beam 20₃ runs through each of the spaces, which are formed between the second cells 80₂ⱼ and the third cells 80₃ⱼ of each of the cell rows 810, 820, 830, and a fourth cooler beam 20₄ runs through each of the spaces, which are formed between the third cells 80₃ⱼ and the fourth cells 80₄ⱼ of each of the cell rows 810, 820, 830. Finally, a fifth cooler beam 20₅ is arranged behind the last (i. e., the respective fourth) cells 80₄ⱼ (j ∈{1, 2, 3}) of each of the cell rows 810, 820, 830, when viewed into the x-direction.

Similar to the situation already described above in the context of Fig. 1, each of the cooler beams 20ₖ (k ∈{1, 2, 3, 4, 5}) comprises a planar first side perpendicular to the drawing plane (i. e., parallel to the y-z-plane of the coordinate system) and facing against the x-direction as well as a planar second side being likewise perpendicular to the drawing plane but facing into the x-direction. Accordingly, each of the first and second side of each of the cooler beams 20ₖ is arranged parallel to each of the front and rear face of each of the cells 80ᵢⱼ employed in the battery system 120 or 130.

Due to this arrangement of cells 80ᵢⱼ and cooler beams 20ₖ, the cell rows 810, 820, 830 are each divided into a plurality of blocks in a similar way as already described above in the context of the first embodiment shown in Fig. 1. In contrast to the first embodiment, however, the cell rows 810, 820, 830 are divided, in the second embodiment (Fig. 3) and the third embodiment (Fig. 4), into cell blocks such that each of the blocks only comprises a single battery cell. Furthermore, each of the front face and the rear face of the cells positively abuts against the respective second side part first side of the adjacent cooler beams 20ₖ. In other words, in the second embodiment (Fig. 3) and the third embodiment (Fig. 4), each of the cells is arranged in between two cooler beams and positively abuts with two of its faces against the cooler beams. Since the front and rear faces of the cells are the cell's largest faces (see as to Fig. 2), an excellent heat exchange between the cooler beams 20ₖ and the cells 80ᵢⱼ is guaranteed. However, as both large faces of each of the cells are thermal contact with the cooler beam, the cooling effect provided to the cells 80ᵢⱼ by the cooler beams 20ₖ of the embodiment shown in Figs. 3 and 4 (when the cooling system operated; see below) is even more efficient in comparison to the cooling effect provided by the first embodiment (Fig. 1), where only one of the front and rear faces of each of the cells is involved into the heat exchange with the cooler beams. In fact, the area employable for the heat exchange the embodiment shown in Figs. 3 and 4 is twice as large as in the first embodiment (Fig. 1). Thus, the second embodiment (Fig. 3) and the third embodiment (Fig. 4) provide for a maximum heat exchange with the cooler beams, and thus allow for maximum efficiency respect to the cooling effect.

Similar to the situation already explained above with reference to Fig. 1, the cells 80ᵢⱼ of the battery system 120 or 130 are grouped into several groups due to the intersection of the cell rows 810, 820, 830 by the plurality of cooler beams 20ₖ. Specifically, each group comprises any one of the cells positioned between one pair of neighbored cooler beams. That is to say, in the second embodiment (Fig. 3) and the third embodiment (Fig. 4), the k-th group of cells is given by the set of cells {80ᵢ₁ , 80ᵢ₂ , 80ᵢ₃} positioned between the k-th cooler beam 20ₖ and the (k+1)-th cooler beam 20ₖ₊ᵢ (k ∈{1, 2, 3, 4}), when viewed into the x-direction.

Again, the cells of each group are electrically connected to each other in series. The electrical connections may be established by wires or busbars. For example, with regard to the first group, one of the terminals of the cell 80₁₁ depicted in the left bottom corner of the matrix of cells shown in Figs. 3 and 4 is connected via a busbar E₁₁₁₂ to a terminal of the cell 80₁₂ arranged next to it (with respect to the y-direction) in the first group, and the other terminal of the latter cell 80₁₂ is connected by a further busbar E₁₂₁₃ to a terminal of the third cell 80₁₃ in the first group. Of course, the connections have to be realized such that negative terminals are connected only with positive terminals in order to establish a serial connection. The same scheme applied in a corresponding manner to each of the other groups of cells comprised in the battery systems 120, 130. Further, the groups of cells themselves are electrically connected to each other in series. For example, with reference to Figs. 3 and 4, the first group is connected to the second group by means of a busbar E₁₃₂₃ that electrically connects a terminal of the rightmost cell 80₁₃ of the first group with a terminal of the rightmost cell 80₂₃ of the second group. Also, the second group is connected to the third group by means of a further busbar E₂₁₃₁ that electrically connects a terminal of the left cell 80₂₁ of the second group with a terminal of the left cell 80₃₁ of the third group. The third group is then connected in a similar manner to the fourth group by a further busbar E₃₃₄₃. Of course, also the connections of groups have to be realized such that negative terminals are connected only with positive terminals in order to establish a serial connection. Then, each of the groups are connected in series, and within each of the groups, of the cells are connected in series. Thus, the complete set of cells comprised in the battery system 120 or 130 is connected in series. Then the free terminal of cell 80₁₁ depicted in the left bottom corner and the free terminal of the cell 80₄₁ depicted in the left upper corner in the matrix of cells as shown in Figs. 3 and 4 can serve as the first terminal T1 and the second terminal T2 of the complete battery system 120, 130. Note that in the arrangements of the second embodiment (Fig. 3) and the third embodiment (Fig. 4), each of the cooler beams 20ₖ is bridged or crossed by only one busbar, similar to the situation of the first embodiment (Fig. 1). Thus, in each of the described embodiments, an unwanted heat transfer between neighbored groups of cells via the electrical connections between these groups is reduced to a minimum.

Further, a main channel is integrated in each of the cooler beams 20₁, 20₂, 20₃, 20₄, 20₅. For example, a first main channel 30₁ is integrated into the first cooler beam 20₁, and a second main channel 30₂ is integrated into the second cooler beam 20₂. Generally, a k-th main channel 30ₖ is integrated into the respective k-th cooler beam 20ₖ (k ∈{1, 2, 3, 4, 5}) according to the embodiments of Figs. 3 and 4. In Figs. 3 and 4, the main channels 30ₖ are depicted-for the sake of simplicity-as being identical with the respective cooler beams 20ₖ. This may correspond to the realization of the main channels as explained below with reference to Fig. 5A. However, the alternative realization of the main channels as illustrated in Fig. 5B may also be used in the first and/or second embodiment of the battery system 120, 130 according to the present disclosure. Each of the main channels 30ₖ is configured for guiding a coolant along the complete length of the cooler beam 20ₖ, into which the main channel is integrated. Thus, when coolant is flowing through a main channel, a heat exchange occurs between each of the battery cells positively abutting against the respective cooler beam and the coolant through the material of the cooler beam. Hence, provided that the temperature of the coolant is lower than the temperature of the battery cells abutting against the respective cooler beam, these cells are cooled in the arrangement provided by the battery system 120 or 130. Also, a propagation of a thermal event (e. g., a thermal run-away) occurring in one of the groups to the other groups of the battery system 120, 130 is avoided or at least considerably retarded due to the mechanical separation provided by the cooler beams as well as by the movement of flowing coolant within the cooler beams, which conveys the heat received by the coolant away from the area, where the heat is generated (e. g., the area of a battery cell affected by a thermal event). This has already explained above in more detail in the context of Fig. 1.

The second embodiment illustrated in Fig. 3 and the third embodiment illustrated in Fig. 4 differ from each other in the way, how fresh coolant (i. e., coolant not having received heat from the battery cells 80ᵢⱼ) is supplied to each of the main channels 30ₖ, and how the coolant having flown through the main channels 30ₖ (used coolant) is discharged from the main channels 30ₖ. In the second embodiment as illustrated in Fig. 2, the coolant supply and the discharging of coolant is realized in a similar manner as described above in the context of the first embodiment with reference to Fig. 1. Specifically, each of the main channels 30ₖ comprises an inlet (left end of the respective main channel in Fig. 3) and an outlet (left end of the respective main channel in Fig. 3). A coolant supply channel 32 is connected to the inlets of each of the main channels 30ₖ. Also, a coolant discharge channel 34 is connected to the outlets of each of the main channels 30ₖ. In other words, the coolant supply channel 32 is in fluid connection to each of the main channels 30ₖ, and the coolant discharge channel 34 is also in fluid connection with each of the main channels 30ₖ. Then, fresh coolant can be supplied, by the coolant supply channel 32, to each of the main channels 30ₖ, and, correspondingly, used coolant discharged from the main channels 30ₖ is received by coolant discharge channel 34. Hence, in the second embodiment of the battery system 120 as shown in Fig. 3, the main channels 30₁, 30₂, 30₃, 30₄, 30₅ can be considered as being connected in parallel within the channel system formed by the main channels 30₁, 30₂, 30₃, 30₄, 30₅ together with the coolant supply channel 32 and the coolant discharge channel 34.

The third embodiment of the battery system 130 according to the present disclosure as illustrated in Fig. 4 provides an alternative way of connecting the main channels 30₁, 30₂, 30₃, 304, 305. Again, each of the main channels 30ₖ (k ∈{1, 2, 3, 4, 5}) comprises an inlet Iₖ (left end of the respective main channel in Fig. 4) and an outlet Oₖ (left end of the respective main channel in Fig. 4). Here, however, for each of the main channels 30ₖ (except for the fifth main channel 30₅, i. e., k ∈{1, 2, 3, 4}), the respective outlet Oₖ is connected with the inlet Iₖ₊₁ of the respective next main channel 30ₖ₊₁, when viewed into the x-direction. The connections are realized by a plurality of respective connection channels 36₁₂, 36₂₃, 36₃₄, 36₄₅. Specifically, the outlet O₁ of the first main channel 30₁ is connected to the inlet I₂ of the second main channel 30₂ via a first connection channel 36₁₂. Likewise, the outlet O₂ of the second main channel 30₂ is connected to the inlet I₃ of the third main channel 30₃ via a second connection channel 36₂₃. Then, the outlet O₃ of the third main channel 30₃ is connected to the inlet I₄ of the fourth main channel 30₄ via a third connection channel 36₃₄, and finally, the outlet O₄ of the fourth main channel 30₄ is connected to the inlet I₅ of the fifth main channel 30s via a fourth connection channel 36₄₅.

Furthermore, the inlet I₁ of the first main channel 30₁ is connected to a coolant supply channel 32, and outlet O₅ of the fifth (last) main channel 30s is connected to a coolant discharge channel 34. Hence, in the third embodiment of the battery system 130 as illustrated by Fig. 4, the main channels 30₁, 30₂, 30₃, 30₄, 30₅ can be considered as being connected in series within the channel system formed by the main channels 30₁, 30₂, 30₃, 30₄, 30₄, 30₅ together with the connection channels 36₁₂, 36₂₃, 36₃₄, 36₄₅ and the coolant supply channel 32 as well as the coolant discharge channel 34.

In each of the second embodiment of the battery system 120 (Fig. 3) and first embodiment of the battery system 130 (Fig. 4), the coolant supply channel 32 comprises a main inlet I adapted for being connected with an external cooling system (not shown) configured for supplying the coolant supply channel 32 with a fresh coolant Fₗ via the main inlet I. In the second and third embodiment of the battery system 120, 130, the coolant supply channel 32 is part of the battery system 120, 130. In alternative embodiments, the coolant supply channel 32 may be part of the external cooling system. Also, the coolant discharge channel 34 comprises a main outlet O adapted for being connected with an external cooling system (not shown) configured for receiving used coolant Fₒ discharged from the coolant discharge channel 34 via the main outlet O. In the second and third embodiment of the battery system 120, 130, the coolant discharge channel 34 is part of the battery system 120, 130. In alternative embodiments, the coolant discharge channel 34 may be part of the external cooling system.

Of course, in each of the embodiments described above with reference to Figs. 1, 3 and 4, the flow directions of the coolant and any point within the channel system can be reversed by using the main inlet I of the channel system as an outlet and using the main outlet O of channel system as an inlet. In other words, the cooling effect of the channel system on the battery system 110, 120, or 130 is not affected by such a reversed operation.

Figures 5A and 5B show each, in a schematical manner, a cross-sectional cut through two alternative examples of a cooler beam 20 that can be used in the battery system according to the present disclosure. In the examples, the cooler beam 20 is arranged adjacent to and between two battery cells 80_{i,j} and 80_{i+1,j}. Accordingly, the cooler beam 20 may be any one of the first, second, third, fourth cooler beam 20₁, 20₂, 20₃, 20₄ in the first embodiment shown in Fig. 1 or any one of the second, third, fourth cooler beam 20₂, 20₃, 20₄ in the second or third embodiment shown in Figs. 3 and 4. Further, the battery cells 80_{i,j} and 80_{i+1,j} belong to same cell row (the j-th cell row) in a battery system according to the present disclosure. For example, the cell 80_{i,j} depicted on the right side in Figs. 5A and 5B (in the following shortly referred to as "right cell") may correspond to the third cell 80₃₂ of the second cell row of one of the first, second, or third embodiment described in the foregoing, and the cell 80_{i+1,j} depicted on the left side in Figs. 5A and 5B (in the following shortly referred to as "left cell") may correspond to the fourth cell 80₄₂ of the second cell row of the respective embodiment (then, to obtain this example, one may set i = 3 and j = 2). Then, the Cartesian coordinate system, which is also depicted in Figs. 5A and 5B is consistent with the coordinate systems of the foregoing Figs. 1 to 4.

In the example of Fig. 5A, the cross-sectional profile of the cooler beam 20 has a rectangular shape. Specifically, the cooler beam comprises a first wall 20a abutting against the rear face 89_{i,j} of the right cell 80_{i,j} and a second wall 20b abutting against the front face 88_{i+1,j} of the left cell 80_{i+1,j}. To establish a mechanical fixation between the cooler beam 20 and the cells 80_{i,j}, 80_{i+1,j}, the letter may be adhered to the cooler beam 20. This may be realized by adhesives. For example, a first adhesive layer 26a may be arranged between the rear face 89_{i,j} of the right cell 80_{i,j} and the outer face of the first wall 20a, and, correspondingly, a second adhesive layer 26b may be arranged between the front face 88_{i+1,j} of the left cell 80_{i+1,j} and the outer face of second wall 20b. Then, the outer face of the first wall 20a forms the first side 22a of the cooler beam 20, and the outer face of the second 20b forms the second side 22b of the cooler beam 20. Further, the cooler beam 20 comprises a bottom wall 20c and a top wall 20d. The bottom wall 20c connects the bottom edges (with respect to Fig. 1) of the first and second walls 20a, 20b to each other, and the top wall 20d connects the top edges (with respect to Fig. 1) of the first and second walls 20a, 20b to each other. Accordingly, the cross-sectional profile of the cooler beam 20 encloses a space 30 suitable for guiding a fluid such as a coolant. In other words, the cooler beam 20 itself is configured to act as a channel 30 in that a pipe is formed by the entirety of first and second wall 20a, 20b as well as the bottom wall 20c and the top wall 20d of the cooler beam 20. Then, the main channel integrated in the cooler beam 20 is formed by the channel 30.

The cooler beam 20 in the example of Fig. 5A must be designed to have a sufficient mechanical stability to overcome the cell swelling forces along the cell stack (i. e., along the x-direction). However, at the same time, the thermal conductivity along the cell stack shall be minimized. To protect the cooler beam 20 against the high temperatures of the cell in case of a thermal runaway (ca. 700°C), the cooler beam 20 may preferably be made of steel, which helps to realize both afore-mentioned design requirements.

As indicated by the flame symbols R depicted within the left cell 80_{i+1,j}, one of the cells adjacent to the cooler beam 20 may be affected by a thermal event (i. e., the occurrence or generation of an abnormal high temperature within the battery cell) such as a thermal run-away (in the latter case, temperatures of about 700° C may be generated). In Fig. 5A, the temperature is schematically indicated (on a relative scale without reference values) by a dyeing of areas within a cell according to the great scale, wherein the light gray denotes a relatively low temperature or the normal operation temperature of the cell, a medium gray denotes a medium temperature, and a dark gray denotes a high temperature generated by the thermal event. The thermal event R may be detected by a suitable detection system (not shown) connected with an evaluation unit (not shown), which may be integrated, e. g., in the battery management unit (BMU; not shown) of the battery system according to the present disclosure (see above). Upon detection of the thermal event, the BMU may start a cooling system connected with the channel system of the battery system. For example, with reference to the embodiment shown in Figs. 1, 3, and 4 (see above), the cooling system may be connected to the main inlet I of the coolant supply channel 32 of the battery system 110, 120, or 130 and may be further configured to supply the coolant supply channel 32 with fresh coolant. Correspondingly, the cooling system may be connected to the main outlet O of the coolant discharge channel 34 and be configured to receive used coolant discharged from the main channels of the battery system. Thus, after being started, coolant having a considerably lower temperature (e. g., 35°C) than the cells- and in particular lower than the temperature of the cell affected by the thermal event R-is guided through each of the main channels. Then, in this situation, a temperature gradient arises in the area between the left cell 80_{i+1,j} affected by the thermal event R and the coolant flowing within the channel 30. Since the second wall 20b is located, in the example, exactly in this area, the heat transfer is generated through the material of the second wall 20b. Specifically, heat propagates from the hot area within the left cell through the second wall 20b into the coolant within the main channel 30. Thereby, thermal energy is released from the left cell 80_{i+1,}j, and the temperature of the left cell 80_{i+1,j} is thereby reduced. As can be seen from Fig. 5A, most of the interior side 23b of the second wall 20b is thermally connected to the coolant. Thus, most of the thermal energy propagating through the second wall 20b will be received by the coolant and thus guided away from the area of the thermal event R and finally discharged out of the battery system. Only a rather small amount of heat energy may propagate, via the bottom wall 20c and the top wall 20d to the opposite first wall 20a, thereby increasing the temperature of the opposite first wall 20a. This effect is further muted, as also the bottom wall 20c and the top wall 20d are each and contacts to the coolant and thus cooled. Accordingly, the heat transfer from the left cell 80_{i+1,j} to the right cell 80_{i,j} is largely prevented. Thus, the temperature of the right cell 80_{i,j} is kept below, e. g., 150°C even in cases that a thermal event occurs in the left cell 80_{i+1,j}.

As already indicated above, the cooler beam 20 in the example of Fig. 5A is preferably made of steel. The worse thermal conductivity of steel compared to aluminum can be well compensated by the much bigger cooling surface (i. e., the areas of the rear face 80_{i+1,j} and the second side 22b of the cooler beam 20). The steel material helps to provide sufficient stability of the cooler beam 20 against cell swelling forces arising from the cells when being operated or in case of thermal events. Further, due to the steel material, the required cross-section of material present between the left cell 80_{i+1,j} and the right cell 80_{i,j} is largely reduced, which leads to a lower thermal conductivity between the left cell 80_{i+1,j} and the right cell 80_{i,j}.

A further example of the cooler beam 20 is shown in Fig. 5B, which may be made of aluminum. Preferably, the cooler beam 20 in this example is manufactured as an aluminum extrusion profile. Like the cooler beam of Fig. 5A, the cooler beam 20 shown in Fig. 5B comprises a first wall 20a abutting against the rear face 89_{i,j} of the right cell 80_{i,j} and a second wall 20b abutting against the front face 88_{i+1,j} of the left cell 80_{i+1,j}. However, in contrast to the cooler beam of Fig. 5A, the cooler beam 20 shown in Fig. 5B does not comprise a bottom wall or a top wall. Instead, a plurality of pipes is arranged on each of the interior sides (i. e., the side 23a of first wall 20a facing the second wall 20b, and the side 23b of the second wall 20b facing the first wall 20a). In the example, three first pipes 41a, 41b, 41c are arranged on the interior side 23a of the first wall 20a, and the second pipes 42a, 42b, 42c are arranged on the interior side 23b of the second wall 20b. Each of the pipes 41a, 41b, 41c, 42a, 42b, 42c may extend across the complete length of the cooler beam 20 along the y-direction (i. e., perpendicular to the drawing plane). Each of the pipes comprise a cavity C configured for guiding a coolant. The pipes are positioned pairwise such that for every pair, the pipes are arranged opposite to each other on the opposite interior sides 23a, 23b of the walls 20a, 20b. For example, one pair may be located near the top edges of the walls 20a, 20b (the terms "top," "bottom," "upper," and the like used with reference to Fig. 5B in the present context). This pair comprises a first top pipe 41a arranged on the interior side 23a of the first wall 20a and a second top pipe 41b arranged on the interior side 23b of the second wall 20b, the second top pipe 41b being positioned opposite to the first top pipe 41a with respect to the x-direction. To provide mechanical stability to the cooler beam 20, the first top pipe 41a and the second top pipe 41b are mechanically connected to each other by an upper rod or rib 44a. The rod or rib 44a is connected to the first top pipe 41a on an area of the first top pipe 41a, which faces the second wall 20b. Correspondingly, the rod or rib 44a is connected to the second top pipe 42a on an area of the second top pipe 41b, which faces the first wall 20a. Thus, the upper rod or rib 44a is not directly in mechanical contact to any one of the first and second wall 20a, 20b. Hence, the upper rod or rib 44a is also not directly in thermal contact to any one of the first and second wall 20a, 20b. Furthermore, when coolant flows through the first and second top pipes 41a, 41b, the first and second top pipes 41a, 41b are cooled such that the areas on these pipes facing away from the respective interior sides 23a, 23b of the walls 20a, 20b, on which the pipes are arranged, will have a lower temperature than the respective interior sides 23a, 23b. In other words, due to both effects, the active cooling by the coolant and the avoidance of direct mechanical contact to the interior sides 23a, 23b, thermal heat exchange between the first wall 20a and the second wall 20b of cooler beam 20 is minimized in the example of Fig. 5A. In the example, a further pair of pipes 41c, 42c arranged opposite to the outer on the interior sides 23a, 23b of the walls 20a, 20b is arranged, in a corresponding manner with regard to the assembly along the x-direction, at the bottom edges of the walls 20a, 20b, and still a further pair of pipes 41b, 42b is arranged, in a similar manner as described before, in the centered areas (with regard to the z-direction) of the interior sides 23a, 23b of the walls 20a, 20b.

The cooler beam 20 in the example of Fig. 5B must provide a sufficient mechanical stability to overcome the cell swelling forces along the cell stack (i. e., along the x-direction) and, at the same time, shall minimized the thermal conductivity along the cell stack. As already indicated above, the cooler beam 20 in this example is preferably designed as an aluminum extrusion profile. To protect the aluminum against the very high temperatures of the cells and thus, on the side faces of the cells (during normal operation mode, and in particular, during a thermal event), additional mica sheets 24a, 24b or similar material may be used in between the cells and the cooler beam 20. This material will slow down the thermal transfer from the cells to the cooler and will allow that the cooler beam 20 stays at lower temperatures. The aluminum extrusion profile is designed in a way that on each side the coolant (e. g., cooling water) flows throw a plurality of pipes 41a, 41b, 41c, 42a, 42b, 42c. To minimize the thermal connection across the cooler beam, only small rods or ribs 44a, 44b, 44c are connecting the left and the right half of the cooler. In addition, these connections are based on the cooling pipes 41a, 41b, 41c, 42a, 42b, 42c rather than on the walls 20a, 20b.

When a thermal event such as a thermal run-away occurs, e. g., in the left cell 80_{i+1,j} as again indicated by the flame symbols R depicted within that cell (see the above remarks as to Fig. 5A), a thermal propagation to the right cell 80_{i,j} is largely prevented by the construction of the cooler beam 20 shown in Fig. 5B, due to several effects: (i) The left cell 80_{i+1,j} as well as the right cell are cooled 80_{i,j} by heat exchange with the coolant. (ii) The mechanical contact between the first wall 20a and the second wall 20b by solid members of the cooler beam 20 (here: the rods or ribs 44a, 44b, 44c) is minimized. (iii) The rods or ribs 44a, 44b, 44c themselves are cooled by the coolant and are, additionally, arranged on "cooled areas" of the pipes 41a, 41b, 41c, 42a, 42b, 42c as explained above.

In certain situations, an alternative example of a cooler beam may be sufficient, which is essentially similar to the cooler beam 20 shown in Fig. 5A, except for the arrangement of the pipes, which is adapted such that pipes are arranged only on one of the interior sides 23a, 23b. This is meaningful, e. g., in the battery systems shown in Figs. 3 and 4, if the cooler beam is intended to serve as the first beam 20₁ or the last (fifth) beam 20₅. As these cooler beams are arranged such in the battery system 120 or 130 that cells are arranged only adjacent to one of their first and second sides, the respective other side needs not to be cooled and thus needs not to be in thermal contact to the pipes provided in that cooler beams.

### Reference signs

- 20, 20₁, 20₂, 20₃, 20₄, 20₅, 20ₖ: cooler beams
- 20a, 20b, 20c, 20d: walls
- 22a: first side of cooler beam
- 22b: second side of cooler beam
- 23a, 23b: interior sides of cooler beam
- 24a, 24b: thermally insulating layers
- 26a, 26b: adhesive layers
- 30, 30₁, 30₂, 30₃, 30₄, 30₅, 30ₖ: main channels
- 32: coolant supply channel
- 34: coolant discharge channel
- 36₁₂, 36₂₃, 36₃₄, 36₄₅: connection channels
- 41a, 41b, 41c: pipes
- 42a, 42b, 42c: pipes
- 44a, 44b, 44c: rods or ribs
- 80, 80_{i,j}, 80_{i+1,j}: battery cells
- 80₁₁, 80₂₁, 80₃₁, 80₄₁, 80₅₁, 80₆₁, 80₇₁, 80₈₁: battery cells (of first cell row)
- 80₁₂, 80₂₂, 80₃₂, 80₄₂, 80₅₂, 80₆₂, 80₇₂, 80₈₂: battery cells (of first cell row)
- 80₁₃, 80₂₃, 80₃₃, 80₄₃, 80₅₃, 80₆₃, 80₇₃, 80₈₃: battery cells (of first cell row)
- 81, 82: terminals (of battery cell)
- 83: venting outlet
- 84: top face
- 86: lateral face
- 88, 88_{i+1,j}: rear face
- 89_{i,j}: front face
- 110, 120, 130: battery systems
- 810: first cell row
- 820: second cell row
- 830: third cell row
- b₁₂: area between the first and second cell row
- b₂₃: area between the second and third cell row
- C: cavity
- E₁₁₁₂, E₁₂₁₃, E₁₃₂₃, E₂₁₃₁, E₃₃₄₃: busbars
- E₄₁₅₁, E₅₃₆₃, E₆₁₇₁, E₂₂₁₂, E₂₂₂₃: busbars
- E₃₁₃₂, E₃₂₃₃, E₄₃₅₃: busbars
- F: coolant
- F₁, F₂, F₃, F₄: flow of coolant in main channels
- F_{I}: fresh coolant
- F_{O}: used coolant
- I: main inlet
- I₁, I₂, I₃, I₄, I₅: inlets (of main channels)
- O: main outlet
- O₁, O₂, O₃, O₄, O₅: outlets (of main channels)
- R: thermal event (e. g., thermal run-away)
- T1: first terminal (of battery system)
- T2: second terminal (of battery system)

- x, y, z: axes of a Cartesian coordinate system

## Claims

1. A battery system (110, 120, 130) comprising:
a plurality of cell rows (810, 820, 830), each of the cell rows comprising a plurality of cells (80ᵢⱼ) arranged in a row extending along a first direction (X);
a plurality of cooler beams (20ₖ); and
a channel system comprising a plurality of main channels (30ₖ), each of the main channels being configured for guiding a coolant (F);
each of the cells (80ᵢⱼ) having an essentially prismatic shape being confined, with regard to the first direction (X), by a planar front face and a planar rear face each arranged perpendicular to the first direction (X), and wherein, when viewed into the first direction (X): for each cell, the front side is arranged in front of the rear side; the shape of each of the cells being further confined, with regard to a second direction (Y), by a first lateral face and a second lateral face, and, with regard to a third direction (Z), by a bottom face facing the base portion and a top face;
wherein each of the cell rows (810, 820, 830) is sub-divided into a plurality of blocks, each of the blocks comprising at least one cell (80ᵢⱼ), and each of the blocks having a front side and a rear side, wherein, when viewed into the first direction (X), the front side is formed by the front face of the first cell of the block and the rear side is formed by the rear face of the last cell of the block;
wherein each of the cooler beams (20ₖ) is confined, with regard to the first direction (X), by a planar first side (22a) and a planar second side (22b), each of the front side and the rear side arranged perpendicular to the first direction (X), and the first side being arranged in front of the second side when viewing into the first direction (X);
wherein, for each of the blocks, the front side of the block positively abuts against the second side (22b) of one of the cooler beams (20ₖ), and/or the rear side of the block positively abuts against the first side (22a) of another one of the cooler beams;
wherein, for each of the cooler beams (20ₖ), one of the main channels (30ₖ) is integrated in the cooler beam and is thermally connected to the cooler beam.

2. The battery system according to claim 1,
further comprising a carrier framework having a base portion,
wherein each of the cell is arranged thermally insulated from the base portion.

3. The battery system (110, 120, 130) according to any one of claims 1 to 2, wherein, for any two cells arranged adjacent to each other in the second direction (Y), the lateral side of one of the cells facing a lateral side of the other one of the cells is thermally insulated from the lateral side of the other one of the cells.

4. The battery system (110, 120, 130) according to claim 2 or 3,
wherein a thermal insulation of each of the cells to the base portion comprises an air gap or at least a partial air gap or comprises an insulation layer; and/or
wherein, as far as the claim depends on claim 3, a thermal insulation between any to cells arranged adjacent to each other with respect to the second direction comprises an air gap or at least a partial air gap or comprises an insulation layer.

5. The battery system (110, 120, 130) according to any one of claims 1 to 4, wherein each of the front face and the rear face (88) of a cell (80ᵢⱼ) has a larger area than each of the first lateral face (86) and the second lateral face of the cell.

6. The battery system (110, 120, 130) according to any one of claims 1 to 5, wherein each of the cooler beams (20ₖ) positively abuts to one of the front side and the rear side of at least one block of each cell row (810, 820, 830).

7. The battery system (110, 120, 130) according to claim 6,
wherein all cell rows (810, 820, 830) comprise the same number of blocks;
wherein, when viewing into the first direction (X), for each of the cell rows (810, 820, 830), the rear side of the first block positively abuts to the first side of one of the cooler beams (20ₖ) and the front side of the last block positively abuts to the second side of one of the cooler beams (20ₖ); and
wherein, for each block being arranged, in one of the cell rows (810, 820, 830), between the first block and the last of the cell row when viewing into the first direction (X), the front side of the block positively abuts to the second side of one of the cooler beams (20ₖ) and the rear side of the block positively abuts to the first side of one of the cooler beams (20ₖ).

8. The battery system (110, 120, 130) according to any one of claims 1 to 7,
wherein each block comprises at most two cells (80_{i,j}); or
wherein each block comprises a single cell (80_{i,j}).

9. The battery system (110, 120, 130) according to any one of claims 1 to 8,
wherein each of the cooler beams (20ₖ) comprises a pipe extending along the second direction (Y),
the pipe having a first planar side portion (20a) forming, at the exterior surface, the first planar side (22a) of the cooler beam that comprises the pipe, and
the pipe having a second planar side portion (20b) forming, at the exterior surface, the second planar side (22b) of the cooler beam that comprises the pipe.

10. The battery system (110, 120, 130) according to any one of claims 1 to 8, wherein each of the cooler beams comprises an aluminum cooler core arranged between two thermally insulating layers (24a, 24b).

11. The battery system (110, 120, 130) according to 10,
wherein the aluminum cooler core comprises a first wall (20a) and a second wall (20b),
the first and second wall (20a, 20b) each extending along the second direction (Y) and arranged opposite to each other with regard to the first direction (X), wherein, when viewed in the first direction (X), the first wall (20a) is arranged in front of the second wall (20b).

12. The battery system (110, 120, 130) according to 11, wherein, for each of the cooler beams (20k), the main channel (30k) integrated into the cooler beam comprises:
at least one or more first cooling pipes (41a, 41b, 41c) each extending along the second direction (Y) and arranged on a side of the first wall (20a) facing the second wall (20b); and
at least one or more second cooling pipes (42a, 42b, 42c) each extending along the second direction (Y) and arranged on a side of the second wall (20b) facing the first wall (20a).

13. The battery system (110, 120, 130) according to claim 11 or 12,
wherein the first wall (20a) and the second wall (20b) are connected to each other by rods or ribs (44a, 44b, 44c),
wherein each of the rods or ribs (44a, 44b, 44c) extends between one of the first cooling pipes (41a, 41b, 41c) and one of the second cooling pipes (42a, 42b, 42c).

14. The battery system (110, 120, 130) according to any one of claims 1 to 13, further comprising:
a cooling system configured for being activated and deactivated;
a battery management unit;
a detection system configured for detecting, for some or all of the cells (80_{i,j}), whether a thermal event (R) occurs in the cell;
wherein the detection system is further configured for sending a signal to the battery management unit, when a thermal event (R) has been detected;
wherein the battery management unit is further configured for receiving a signal from the detection system and for activating the cooling system upon receiving a signal from the detection system; and
wherein the cooling system is further configured for suppling, when being activated, each of the main channels (30ₖ) with a coolant (F).

15. A vehicle comprising at least one battery system (110, 120, 130) according to any one of claims 1 to 14.

## Amended claims

### Amended claims in accordance with Rule 137(2) EPC.

1. A battery system (110, 120, 130) comprising:
a plurality of cell rows (810, 820, 830), each of the cell rows comprising a plurality of cells (80ᵢⱼ) arranged in a row extending along a first direction (X);
a plurality of cooler beams (20ₖ); and
a channel system comprising a plurality of main channels (30ₖ), each of the main channels being configured for guiding a coolant (F);
each of the cells (80ᵢⱼ) having an essentially prismatic shape being confined, with regard to the first direction (X), by a planar front face and a planar rear face each arranged perpendicular to the first direction (X), and wherein, when viewed into the first direction (X): for each cell, the front side is arranged in front of the rear side; the shape of each of the cells being further confined, with regard to a second direction (Y), by a first lateral face and a second lateral face, and, with regard to a third direction (Z), by a bottom face facing the base portion and a top face;
wherein each of the cell rows (810, 820, 830) is sub-divided into a plurality of blocks, each of the blocks comprising at least one cell (80ᵢⱼ), and each of the blocks having a front side and a rear side, wherein, when viewed into the first direction (X), the front side is formed by the front face of the first cell of the block and the rear side is formed by the rear face of the last cell of the block;
wherein each of the cooler beams (20ₖ) is confined, with regard to the first direction (X), by a planar first side (22a) and a planar second side (22b), each of the front side and the rear side arranged perpendicular to the first direction (X), and the first side being arranged in front of the second side when viewing into the first direction (X);
wherein, for each of the blocks, the front side of the block positively abuts against the second side (22b) of one of the cooler beams (20ₖ), and/or the rear side of the block positively abuts against the first side (22a) of another one of the cooler beams;
wherein, for each of the cooler beams (20ₖ), one of the main channels (30ₖ) is integrated in the cooler beam and is thermally connected to the cooler beam;
wherein each of the cooler beams (20ₖ) comprises a cooler core comprising a first wall (20a) and a second wall (20b),
the first and second wall (20a, 20b) each extending along the second direction (Y) and arranged opposite to each other with regard to the first direction (X), wherein, when viewed in the first direction (X), the first wall (20a) is arranged in front of the second wall (20b); and
**characterized in that**, for each of the cooler beams (20ₖ), the main channel (30ₖ) integrated into the cooler beam comprises:
one or more first cooling pipes (41a, 41b, 41c) each extending along the second direction (Y) and arranged on a side of the first wall (20a) facing the second wall (20b); and
one or more second cooling pipes (42a, 42b, 42c) each extending along the second direction (Y) and arranged on a side of the second wall (20b) facing the first wall (20a);
wherein the first cooling pipes (41a, 41b, 41c) are each arranged separated from the second wall (20b) and the second cooling pipes (42a, 42b, 42c) are each arranged separated from the first wall (20a).

2. The battery system according to claim 1,
further comprising a carrier framework having a base portion,
wherein each of the cell is arranged thermally insulated from the base portion.

3. The battery system (110, 120, 130) according to any one of claims 1 to 2, wherein, for any two cells arranged adjacent to each other in the second direction (Y), the lateral side of one of the cells facing a lateral side of the other one of the cells is thermally insulated from the lateral side of the other one of the cells.

4. The battery system (110, 120, 130) according to claim 2 or 3,
wherein a thermal insulation of each of the cells to the base portion comprises an air gap or at least a partial air gap or comprises an insulation layer; and/or
wherein, as far as the claim depends on claim 3, a thermal insulation between any to cells arranged adjacent to each other with respect to the second direction comprises an air gap or at least a partial air gap or comprises an insulation layer.

5. The battery system (110, 120, 130) according to any one of claims 1 to 4, wherein each of the front face and the rear face (88) of a cell (80ᵢⱼ) has a larger area than each of the first lateral face (86) and the second lateral face of the cell.

6. The battery system (110, 120, 130) according to any one of claims 1 to 5, wherein each of the cooler beams (20ₖ) positively abuts to one of the front side and the rear side of at least one block of each cell row (810, 820, 830).

7. The battery system (110, 120, 130) according to claim 6,
wherein all cell rows (810, 820, 830) comprise the same number of blocks;
wherein, when viewing into the first direction (X), for each of the cell rows (810, 820, 830), the rear side of the first block positively abuts to the first side of one of the cooler beams (20ₖ) and the front side of the last block positively abuts to the second side of one of the cooler beams (20ₖ); and
wherein, for each block being arranged, in one of the cell rows (810, 820, 830), between the first block and the last of the cell row when viewing into the first direction (X), the front side of the block positively abuts to the second side of one of the cooler beams (20ₖ) and the rear side of the block positively abuts to the first side of one of the cooler beams (20ₖ).

8. The battery system (110, 120, 130) according to any one of claims 1 to 7,
wherein each block comprises at most two cells (80_{i,j}); or
wherein each block comprises a single cell (80_{i,j}).

9. The battery system (110, 120, 130) according to any one of claims 1 to 8,
wherein each of the cooler beams (20ₖ) comprises a pipe extending along the second direction (Y),
the pipe having a first planar side portion (20a) forming, at the exterior surface, the first planar side (22a) of the cooler beam that comprises the pipe, and
the pipe having a second planar side portion (20b) forming, at the exterior surface, the second planar side (22b) of the cooler beam that comprises the pipe.

10. The battery system (110, 120, 130) according to any one of claims 1 to 8, wherein each of the cooler cores are made of aluminum and are arranged between two thermally insulating layers (24a, 24b).

11. The battery system (110, 120, 130) according to any one of claims 1 to 10,
wherein the first wall (20a) and the second wall (20b) are connected to each other by rods or ribs (44a, 44b, 44c),
wherein each of the rods or ribs (44a, 44b, 44c) extends between one of the first cooling pipes (41a, 41b, 41c) and one of the second cooling pipes (42a, 42b, 42c).

12. The battery system (110, 120, 130) according to any one of claims 1 to 11, further comprising:
a cooling system configured for being activated and deactivated;
a battery management unit;
a detection system configured for detecting, for some or all of the cells (80_{i,j}), whether a thermal event (R) occurs in the cell;
wherein the detection system is further configured for sending a signal to the battery management unit, when a thermal event (R) has been detected;
wherein the battery management unit is further configured for receiving a signal from the detection system and for activating the cooling system upon receiving a signal from the detection system; and
wherein the cooling system is further configured for suppling, when being activated, each of the main channels (30ₖ) with a coolant (F).

13. A vehicle comprising at least one battery system (110, 120, 130) according to any one of claims 1 to 12.
